# FASCICULE DE BREVET EUROPEEN

(11) **EP 2 149 727 B1**
(45) Date de publication et mention de la délivrance du brevet: **16.11.2011**
(21) Numéro de dépôt: 09165711.4
(22) Date de dépôt: 16.07.2009
(51) Int. Cl.: F16H 45/02

(54) **Appareil d'accouplement hydrocinétique comportant un embrayage de verrouillage muni de moyens de progressivité perfectionnés**
Hydrokinetisches Kupplungsgerät, das eine Verschlusskupplung mit perfektionierten progressiven Mitteln umfasst
Hydrokinetic coupling apparatus incorporating a lock-up clutch with improved means for engagement

(30) Priorité: 31.07.2008 FR 0855294
(43) Date de publication de la demande: 03.02.2010
(73) Titulaire: Valeo Embrayages, 80009 Amiens (FR)
(72) Inventeur: Adamczak, Loïc, 87140, ROUSSAC (FR); Bacher, Michel, 95580, ANDILLY (FR); Duno, Erick, 87100, LIMOGES (FR); Vatin, Géraud, 87570, RILHAC RANCON (FR); Verhoog, Roel, 60190, GOURNAY SUR ARONDE (NL)
(74) Mandataire: Jeuland, Mickaël

(56) Documents cités:
- DE-A1- 19 808 299
- JP-A- 61 262 262
- US-A- 5 056 631

## Description

La présente invention concerne un appareil d'accouplement hydrocinétique comportant un embrayage de verrouillage muni de moyens de progressivité perfectionnés.

L'invention concerne plus particulièrement un appareil d'accouplement hydrocinétique, notamment pour un véhicule automobile, comportant autour d'un axe principal X-X au moins :
- un carter comportant une première coquille, dite arrière, qui lie en rotation un arbre menant et une roue d'impulseur ;
- une roue de turbine qui est solidaire en rotation, par une liaison sans jeu, d'une pièce apte à être liée en rotation à un arbre mené ;
- un embrayage de verrouillage du couplage des arbres menant et mené comportant un piston mobile axialement pour lier, de manière débrayable, une deuxième coquille, dite avant, coquille du carter à l'arbre mené, le piston étant apte à être commandé sélectivement pour serrer axialement au moins une première surface de frottement que comporte un premier élément contre une deuxième surface de frottement associée que comporte un deuxième élément.

Un tel appareil est connu de DE 198 08 299 A1.

D'une manière générale, dans un tel appareil d'accouplement hydrocinétique, le carter dont une première coquille arrière porte la roue d'impulseur constitue l'entrée de l'appareil reliée à l'arbre menant et la sortie est quant à elle constituée au moins par un équipage roue de turbine - moyeu logé à l'intérieur du carter et relié à l'arbre mené.

La roue de turbine et la roue d'impulseur forment un convertisseur dans lequel, conventionnellement, la roue de turbine est entraînée par la roue d'impulseur grâce à la circulation d'un fluide contenu dans le carter, généralement de l'huile.

Dans le cas d'un appareil d'accouplement hydrocinétique pour véhicule automobile, l'arbre menant est l'arbre de sortie du moteur du véhicule et l'arbre mené est relié à des moyens de changement de rapport de vitesses.

Un tel appareil d'accouplement hydrocinétique est généralement équipé d'un embrayage de verrouillage qui est encore appelé "lock-up".

L'embrayage de verrouillage est destiné à permettre, après le démarrage du véhicule, le contrôle du glissement entre les roues de turbine et d'impulseur en contrôlant l'entraînement de l'arbre menant, qui est relié au carter, par l'arbre mené, qui est relié à la roue de turbine, de manière à relier directement l'un à l'autre pour améliorer le rendement.

Ainsi, à partir de conditions de fonctionnement déterminées, l'entraînement de l'arbre menant par l'arbre mené s'effectue par l'embrayage de verrouillage qui est apte à lier directement en rotation le carter et la roue de turbine de manière à réduire à un minimum l'absorption d'énergie dans la transmission du couple entre les arbres menant et mené.

L'embrayage de verrouillage comporte pour ce faire un piston qui est implanté entre l'équipage roue de turbine - moyeu et une paroi sensiblement radiale portée par une deuxième coquille du carter qui, étant liée en rotation à la première coquille du carter, constitue aussi l'élément d'entrée de l'appareil.

Le piston est monté mobile axialement, par rapport à ladite paroi, entre au moins une position de fonctionnement (pontage) et une position de repos. Le déplacement axial du piston entre ces positions extrêmes est commandé par l'application variable d'une pression donnée de part et d'autre du piston pour lier, sélectivement, le piston en rotation à la paroi.

On rappellera que la conception d'un appareil d'accouplement hydrocinétique varie quelque peu selon les applications, on distingue à cet égard suivant que l'embrayage de verrouillage est de type "monoface" ou de type "bifaces" voir encore de type "multifaces", mais que le fonctionnement général est similaire.

Le contrôle d'entraînement des arbres par l'intermédiaire d'un embrayage de verrouillage est réalisé de manière connue en soi par serrage d'au moins une première surface de frottement que comporte un premier élément contre une deuxième surface de frottement associée portée par un deuxième élément.

Le deuxième élément est par exemple constitué par la deuxième coquille avant du carter dont la paroi forme la deuxième surface de frottement avec laquelle coopère, en position de fonctionnement (pontage), la première surface de frottement du premier élément.

Le premier élément-est par exemple constitué par le piston de l'embrayage de verrouillage portant une garniture de frottement lorsque l'application est de type "monoface" ou par un disque de friction portant deux garnitures de frottement qui est interposé entre le piston et la paroi de la deuxième coquille avant du carter, lorsque l'application est de type "bifaces".

Lorsque l'application est de type "multifaces", le deuxième élément est alors constitué par au moins un flasque qui, portant la deuxième surface de frottement, est lié en rotation à la deuxième coquille du carter. Le deuxième élément est apte à coopérer sélectivement, lorsque le piston applique axialement un effort de serrage destiné à établir le couplage des arbres menant et mené, avec la première surface de frottement associée qui est portée par un disque de friction.

Toutefois, quel que soit le type d'application, il se produit d'une part un laps de temps donné avant que les moyens de commande n'établissent une pression hydraulique suffisante pour provoquer le déplacement du piston et réaliser le pontage.

D'autre part, l'opération de pontage permettant l'accouplement des arbres mené et menant à chaque changement de vitesse s'accompagnent parfois d'à-coups, or de tels à-coups sont indésirables en regard du confort et de l'agrément de conduite recherchés pour le conducteur du véhicule

De plus, on a constaté que les variations de la pression hydraulique sur le piston et sur le carter pendant le fonctionnement, ainsi que les variations de la vitesse de rotation, ont pour effet de faire varier les zones de contact entre les surfaces de frottement.

Ces variations des zones de contact entre les surfaces de frottement sont notamment imputables au phénomène dit "de mise en cône" du piston et/ou de la coquille du carter, phénomène souvent dénoncé mais rarement résolu.

En effet, les variations de conicité du piston et/ou de la coquille du carter-se traduisent par des pressions de contact très variables sur la surface de frottement portée par exemple par une garniture de frottement.

Or, ces variations provoquent localement d'une part des échauffements et, d'autre part, des dégradations, notamment des usures irrégulières et importantes des surfaces de frottement, lesquelles affectent en particulier les garnitures de frottement et leur longévité.

Par conséquent, les variations de pression dont les différents et principaux effets viennent d'être énumérées se traduisent notamment par un phénomène de broutement de l'embrayage de verrouillage, en particulier lors de l'engagement du piston en vue du pontage (position de fonctionnement).

De surcroît, l'ensemble de ces phénomènes provoque souvent une dégradation du fluide hydraulique contenu dans le carter.

Ainsi, les irrégularités de frottement affectent d'une manière générale le bon contrôle de l'embrayage de verrouillage et conduisent à l'apparition de vibrations torsionnelles qui sont souvent à l'origine d'un manque de confort acoustique.

L'invention a notamment pour but de résoudre les inconvénients précités et de proposer un embrayage de verrouillage susceptible de garantir un confort et un agrément lors des changements de vitesses ainsi qu'une distribution de pression de contact au niveau des surfaces de frottement qui soit optimale et uniforme et encore susceptible de compenser les défauts géométriques et les déformations des éléments dues notamment aux conditions variables de fonctionnement.

Dans ce but, l'invention propose un appareil d'accouplement hydrocinétique du type décrit précédemment, caractérisé en ce que l'embrayage de verrouillage de l'appareil comporte des moyens de progressivité qui, déformables élastiquement selon au moins la direction axiale, sont constitués par au moins un premier cordon et un second cordon, globalement coaxial au premier cordon, lesdits premier et second cordons étant respectivement interposés axialement entre au moins une face proximale d'appui portée par le premier élément comportant la première surface de frottement destinée à coopérer par friction avec la deuxième surface de frottement associée et une face distale d'appui portée par un élément adjacent auquel ledit premier élément est lié en rotation par l'intermédiaire de moyens de liaison, et en ce qu'il comporte des moyens d'ouverture aptes à permettre, lors du pontage par le piston, une variation de pression dans un espace que délimite axialement les faces d'appui proximale et distale et radialement les premier et second cordons.

Avantageusement, les moyens de progressivité selon l'invention sont aptes à se déformer en fonctionnement, notamment pour supprimer les à-coups, de manière à garantir un confort à l'utilisateur lors des changements de vitesses.

Avantageusement, les moyens de progressivité selon l'invention sont aussi aptes à compenser les défauts géométriques et les déformations des pièces, en particulier le phénomène de mise en cône et cela de manière à garantir une distribution optimale et uniforme de la pression de contact entre lesdites première et deuxième surfaces de frottement.

Grâce aux moyens de progressivité et les moyens d'ouverture associés selon l'invention, un refroidissement efficace d'au moins une partie des surfaces de frottement est obtenu par circulation de l'huile entre les cordons, dans le ou les espaces, ce qui participe à l'amélioration du fonctionnement et de la commande de l'embrayage.

Avantageusement, les moyens de progressivité selon l'invention permettent encore d'accroître le confort perçu par le conducteur en autorisant une montée plus rapide de la pression commandant le pontage par le piston, ce qui réduit la durée nécessaire pour procéder à un changement de rapport de vitesses sans pour autant provoquer d'à-coups.

Selon d'autres caractéristiques de l'invention :
- l'appareil comporte des moyens d'étanchéité aptes à permettre d'établir une pression de commande pour déplacer axialement le piston de l'embrayage de verrouillage vers une position de fonctionnement, dite de pontage, dans laquelle les surfaces de frottement coopèrent pour coupler les arbres menant et mené ;
- les moyens d'étanchéité sont constitués au moins d'un des cordons interposé axialement entre la face proximale d'appui portée par le premier élément comportant la première surface de frottement et la face distale d'appui portée par l'élément adjacent au premier élément ;
- les moyens d'étanchéité sont constitués par un organe d'étanchéité, tel qu'un joint, distinct des moyens de progressivité ;
- les moyens d'étanchéité sont constitués par les moyens de liaison, tels qu'une soudure ou des rivets, destinés à lier en rotation le premier élément comportant la face proximale d'appui et l'élément adjacent comportant la face distale d'appui ;
- les moyens d'étanchéité sont constitués au moins par un premier moyen d'étanchéité et par un deuxième moyen d'étanchéité respectivement agencés radialement aux extrémités extérieure et intérieure du piston de l'embrayage de verrouillage et délimitant axialement avec la deuxième coquille avant du carter une chambre de commande indépendante ;
- les moyens de progressivité déformables élastiquement comportent au moins un troisième cordon formant un moyen supplémentaire de progressivité, globalement coaxial aux premier et second cordons ;
- le troisième cordon formant le moyen supplémentaire de progressivité délimite radialement un premier espace avec le premier cordon et un deuxième espace avec le second cordon, lesdits espaces étant délimités axialement par les faces proximale et distale d'appui,
- au moins les moyens de progressivité déformables élastiquement sont réalisés en un matériau élastomère, telle qu'une silicone thixotrope, présentant des caractéristiques stables lorsqu'il est -immergé-dans l'huile contenue dans le carter de l'appareil ;
- les moyens d'étanchéité formés par au moins l'un des cordons sont réalisés dans le même matériau élastomère que les moyens de progressivité déformables élastiquement ;
- le matériau élastomère est apte à être adhérisé directement par polymérisation avec l'une et/ou l'autre des faces proximale d'appui du premier élément et distale d'appui de l'élément adjacent ;
- la polymérisation du matériau élastomère est obtenue par chauffage, pendant une durée déterminée, à une température supérieure ou égale à une température donnée dite de polymérisation ;
- le matériau élastomère est adhérisé aux faces proximale d'appui du premier élément et/ou distale d'appui de l'élément adjacent par collage par l'intermédiaire d'une colle apte à lier solidairement le matériau élastomère aux matériaux respectifs du premier élément et de l'élément adjacent ;
- les moyens de progressivité déformables élastiquement sont solidaires de l'une au moins des faces proximale et distale d'appui, de préférence de chacune des deux faces ;
- les moyens d'ouverture destinés à permettre la variation de pression dans au moins un espace annulaire sont constitués par un jeu axial entre les moyens de progressivité déformables élastiquement et celle des faces proximale et distale d'appui avec laquelle les moyens de progressivité déformables élastiquement ne sont pas liés solidairement ;
- les moyens d'ouverture destinés à permettre la variation de pression dans au moins un espace associé sont constitués par au moins un trou traversant axialement l'élément adjacent et/ou par au moins un trou traversant axialement le premier élément de manière à établir une communication entre au moins un espace associé dans lequel ledit au moins un trou débouche et le volume intérieur du carter remplie d'huile ;
- les moyens d'ouverture destinés à permettre la variation de pression dans au moins un espace associé sont constitués par au moins un orifice radial de passage réalisé sélectivement dans tout ou partie des cordons formant les-moyens de progressivité ;
- les moyens d'ouverture sont aptes à établir dans au moins un espace associé, tels que le premier espace compris radialement entre le premier cordon et le second cordon et/ou le deuxième espace compris radialement entre le premier cordon et le troisième cordon, une circulation d'huile propre à permettre un refroidissement, en particulier de la face proximale d'appui du premier élément comportant la première surface de frottement ;
- au moins l'un des cordons des moyens de progressivité est circonférentiellement continu de manière à former les moyens d'étanchéité ;
- au moins l'un des cordons des moyens de progressivité, circonférentiellement discontinu et déterminant entre deux portions consécutives des moyens d'ouverture, est réalisé sous la forme de d'arc de cercle ou de plots qui sont répartis circonférentiellement, de préférence de manière régulière ;
- au moins l'un des cordons des moyens de progressivité est circonférentiellement globalement circulaire ou s'étend circonférentiellement suivant un motif curviligne de type sinusoïdal ;
- les cordons présentent, en coupe axiale, une section sensiblement constante de manière que les faces proximale et distale d'appui s'étendent radialement globalement parallèlement entre elles avec un écartement axial "e", compris entre le premier élément comportant la face proximale d'appui et l'élément adjacent comportant la face distale d'appui, sensiblement constant ;
- les cordons présentent, en coupe axiale, selon la direction radiale et suivant une orientation allant de l'intérieur vers l'extérieur, une section croissante de manière que l'écartement axial "e", compris entre le premier élément comportant la face proximale d'appui et l'élément adjacent comportant la face distale d'appui, augmente suivant la direction radiale afin que la première surface de frottement du premier élément soit inclinée ;
- le premier élément comportant la première surface de frottement et la face proximale d'appui est incliné d'un angle déterminé par rapport à un plan radial orthogonal à l'axe principal et la face distale d'appui de l'élément adjacent s'étend radialement orthogonalement à l'axe principal ;
- au moins l'un des cordons présente une raideur élastique différente de la raideur élastique de l'un au moins des autres cordons ;
- l'embrayage de verrouillage de l'appareil comporte des moyens de butée axiale aptes à limiter la déformation élastique des moyens de progressivité.

Selon d'autres caractéristiques de l'embrayage de verrouillage de l'appareil selon l'invention :
- le premier élément est constitué par une garniture de frottement comportant une première face formant la première surface de frottement et une deuxième face opposée formant la face proximale d'appui des cordons ;
- le premier élément est constitué respectivement par une garniture de frottement comportant la première surface de frottement et par un disque de friction sur l'une des faces duquel la garniture de frottement est rapportée à fixation, notamment par collage, et dont l'autre face, axialement opposée, constitue la face proximale d'appui ;
- la garniture de frottement ou le disque de friction comporte des moyens de liaison aptes à coopérer avec des moyens de liaison complémentaires pour former une liaison en rotation destinée à lier solidairement en rotation, sans jeu circonférentiel, le premier élément à l'élément adjacent comportant la face distale d'appui ;
- la liaison en rotation entre le premier élément, formé par la garniture de frottement ou le disque de friction, et l'élément adjacent est réalisée de préférence par engrènement, par soudage ou par rivetage.

Selon d'autres caractéristiques d'un appareil d'accouplement hydrocinétique selon l'invention comportant un embrayage de verrouillage de type "monoface" :
- l'élément adjacent est constitué par le piston de l'embrayage de verrouillage dont la face radiale avant forme la face distale d'appui et la première surface de frottement que comporte le premier élément est apte à coopérer avec une deuxième surface de frottement portée par la face radiale arrière de la deuxième coquille de carter formant le deuxième élément ;
- l'élément adjacent est constitué par la deuxième coquille avant de carter dont la face arrière forme la face distale d'appui et la première surface de frottement que comporte le premier élément est apte à coopérer avec une deuxième surface de frottement portée par la face radiale avant du piston formant le deuxième élément.

Selon d'autres caractéristiques d'un appareil d'accouplement hydrocinétique selon l'invention comportant un embrayage de verrouillage de type "bifaces" :
- l'élément adjacent comportant la face distale d'appui est constitué par la face radiale avant d'une autre garniture de frottement ou d'un autre disque de friction portant une telle garniture de frottement ;
- la première surface de frottement que comporte le premier élément est destinée à coopérer avec une deuxième surface de frottement qui, axialement en vis-à-vis, est portée par la face radiale arrière de la deuxième coquille de carter formant le deuxième élément et l'autre garniture de frottement de l'élément adjacent comporte une troisième surface de frottement destinée à coopérer avec une quatrième surface associée qui, axialement en vis-à-vis, est portée par la face radiale avant du piston ;
- le premier élément et l'élément adjacent, formés respectivement par une garniture de frottement ou un disque de friction portant une garniture, sont munis de moyens de liaison aptes à lier solidairement en rotation lesdits éléments, directement ou avec interposition d'un amortisseur, à une pièce liée en rotation à la roue de turbine ;
- la pièce est constituée par un élément d'entrée d'un amortisseur, tel que des rondelles de guidage, dont un élément de sortie, tel qu'un voile, est lié en rotation sans jeu à la roue de turbine de l'appareil, l'amortisseur comportant des organes élastiques à action circonférentielle intervenant entre l'élément d'entrée et l'élément de sortie.

Selon d'autres caractéristiques d'un appareil d'accouplement hydrocinétique selon l'invention comportant un embrayage de verrouillage de type "multifaces" :
- le premier élément est formé par un flasque dont une face forme la première surface de frottement destinée à coopérer avec la deuxième surface de frottement portée par un disque de friction formant le deuxième élément et dont une autre face opposée axialement constitue la face proximale d'appui ;
- l'élément adjacent comportant la face distale d'appui est constitué par un autre flasque axialement adjacent au flasque comportant la face proximale d'appui ;
- l'élément adjacent comportant la face distale d'appui est constitué par le piston, ledit piston étant interposé axialement entre la deuxième coquille avant du carter et un flasque comportant la face proximale d'appui ;
- les flasques formant le premier élément et l'élément adjacent sont liés en rotation, notamment par engrènement, à une première pièce de liaison qui est solidaire en rotation, notamment par soudage, de la deuxième coquille avant du carter ;
- l'embrayage de verrouillage comporte au moins un disque de friction qui, formant le deuxième élément comportant la deuxième surface de frottement, est lié en rotation, notamment par engrènement, à une deuxième pièce de liaison qui constitue ladite pièce qui est liée en rotation, directement ou par l'intermédiaire d'un amortisseur, à la roue de turbine ;
- la deuxième pièce de liaison est liée en rotation à un élément d'entrée d'un amortisseur, tel que des rondelles de guidage, dont un élément de sortie, tel qu'un voile, est lié en rotation sans jeu à la roue de turbine de l'appareil, l'amortisseur comportant des organes élastiques à action circonférentielle intervenant entre l'élément d'entrée et l'élément de sortie.

D'autres caractéristiques et avantages de l'invention apparaîtront à la lecture de la description détaillée qui suit pour la compréhension de laquelle on se reportera aux dessins annexés parmi lesquels :

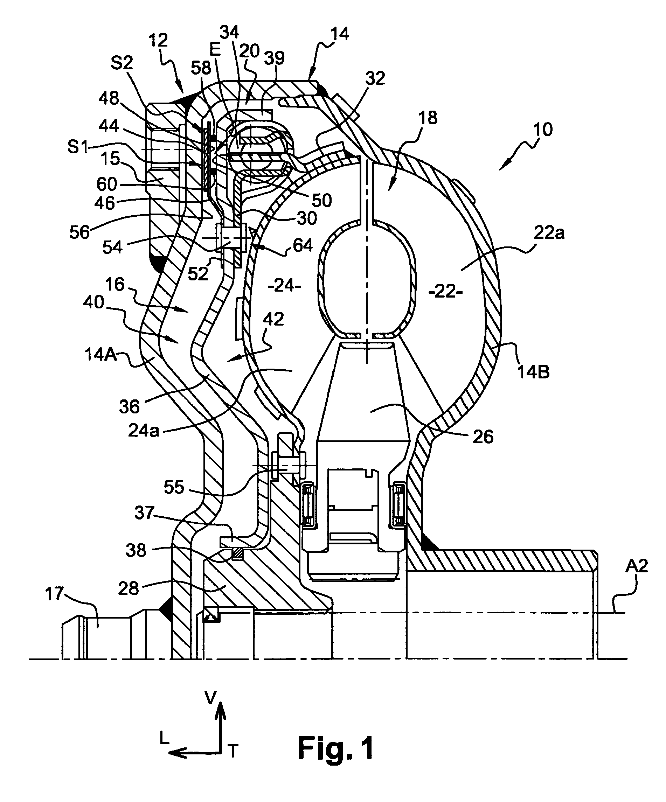

- la figure 1 est une demi vue en coupe axiale qui représente un appareil d'accouplement hydrocinétique équipé, selon une première application, d'un embrayage de verrouillage de type monoface et qui illustre un premier mode de réalisation selon l'invention dans lequel les moyens de progressivité sont constitués par deux cordons interposés axialement entre un piston formant l'élément adjacent et un disque de friction qui, portant une garniture de frottement, forme le premier élément et est lié en rotation au piston de manière étanche par rivetage ;

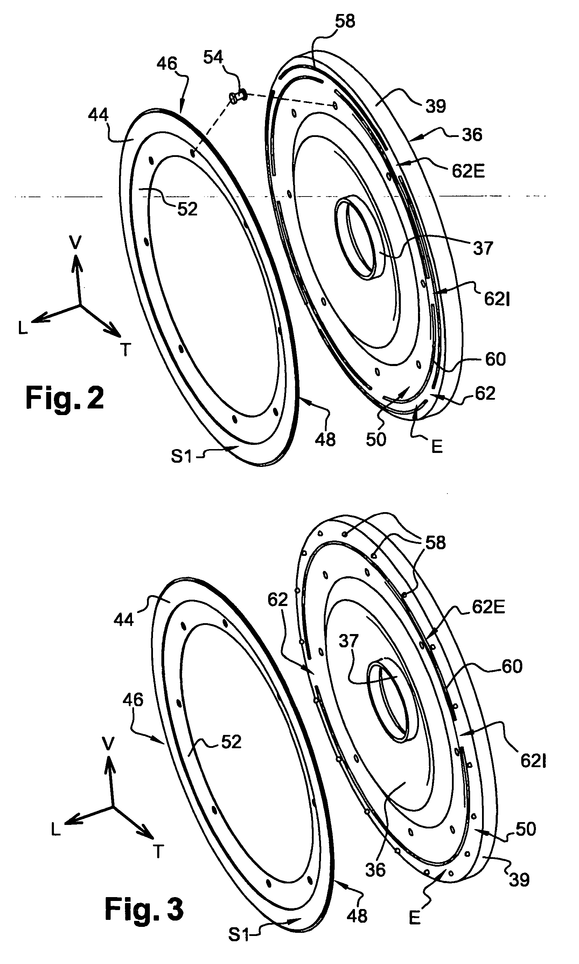

- la figure 2 est une vue en perspective qui représente en éclaté l'embrayage de verrouillage selon le premier mode de la figure 1 et qui illustre en détail un premier exemple de réalisation des moyens de progressivité selon l'invention constitués par un premier et un second cordons formés respectivement par quatre portions en arc de cercle délimitant circonférentiellement des orifices radiaux de passage formant des moyens d'ouverture de l'espace annulaire défini par les cordons ;
- la figure 3 est une vue éclatée en perspective qui, analogue à la figure 2, illustre dans le cas du premier mode un deuxième exemple de réalisation des moyens de progressivité constitués par un premier cordon formé par des plots et par un second cordon formé par deux portions en arc de cercle ;

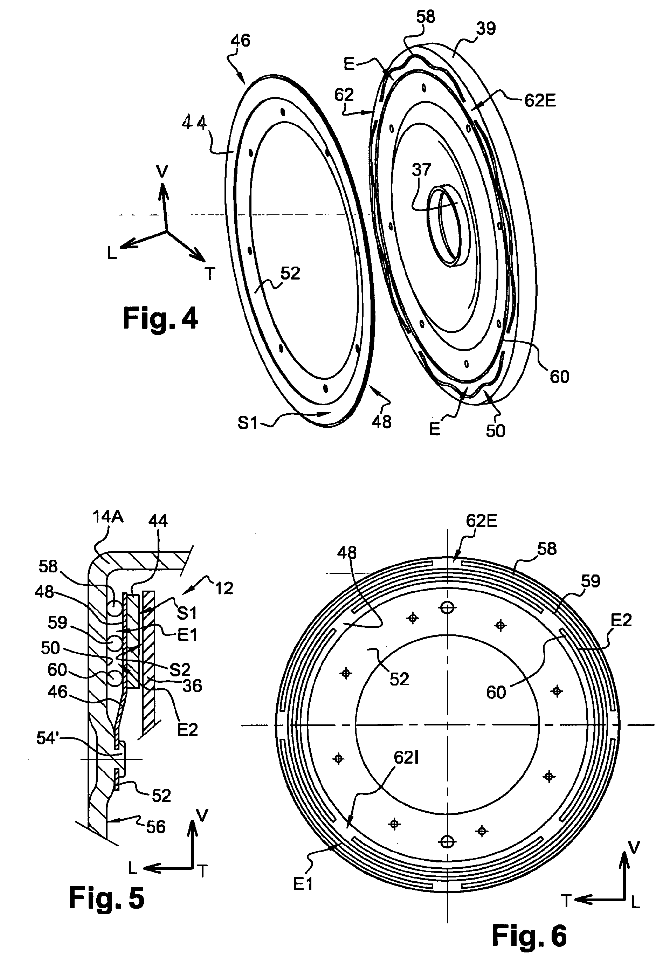

- la figure 4 est une vue éclatée en perspective qui, analogue à la figure 2 ou 3, illustre dans le cas du premier mode un troisième exemple de réalisation des moyens de progressivité constitués par un premier cordon formé circonférentiellement par des portions curvilignes présentant un motif globalement sinusoïdal et par un second cordon circonférentiellement continu formant un moyen d'étanchéité ;
- la figure 5 est une vue en coupe axiale qui représente en détail un appareil d'accouplement hydrocinétique similaire à celui de la figure 1 en ce qu'il est équipé d'un embrayage de verrouillage de type monoface et qui illustre un deuxième mode de réalisation des moyens de progressivité selon l'invention qui sont constitués par trois cordons concentriques, lesquels sont interposés axialement entre une coquille du carter formant l'élément adjacent et un disque de friction qui, portant une garniture de frottement, forme le premier élément et est lié en rotation au carter de manière étanche par rivetage ;
- la figure 6 est une vue de face selon le deuxième mode de réalisation de la figure 5 qui représente, côté avant, les trois cordons concentriques qui, agencés entre la coquille du carter et le disque de friction, déterminent respectivement deux à deux un premier espace annulaire et un deuxième espace annulaire et qui illustre un troisième exemple de réalisation des moyens de progressivité dans lequel le cordon intermédiaire est circulaire et circonférentiellement continu et les cordons interne et externe respectivement formés par quatre portions d'arc de cercle délimitant deux à deux des moyens d'ouverture ;

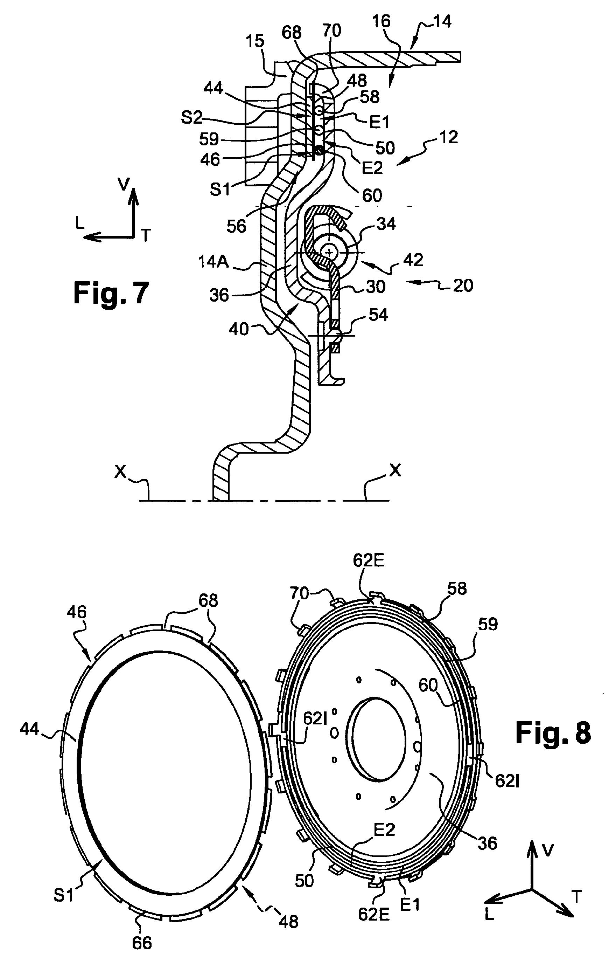

- la figure 7 est une vue en coupe axiale qui représente partiellement un appareil d'accouplement hydrocinétique équipé d'un embrayage de verrouillage de type monoface dans lequel les moyens de liaison en rotation entre le piston et le disque de friction sont constitués par des dentures qui coopèrent par engrènement et qui illustre un

quatrième exemple de réalisation des moyens de progressivité selon l'invention qui sont constitués par trois cordons concentriques dont l'un est continu de manière à former un moyen d'étanchéité ;
- la figure 8 est une vue éclatée en perspective qui représente, selon le quatrième exemple de réalisation de la figure 7, le disque de friction formant le premier élément et les moyens de progressivité qui sont interposés axialement entre le piston formant l'élément adjacent et le disque de friction ;

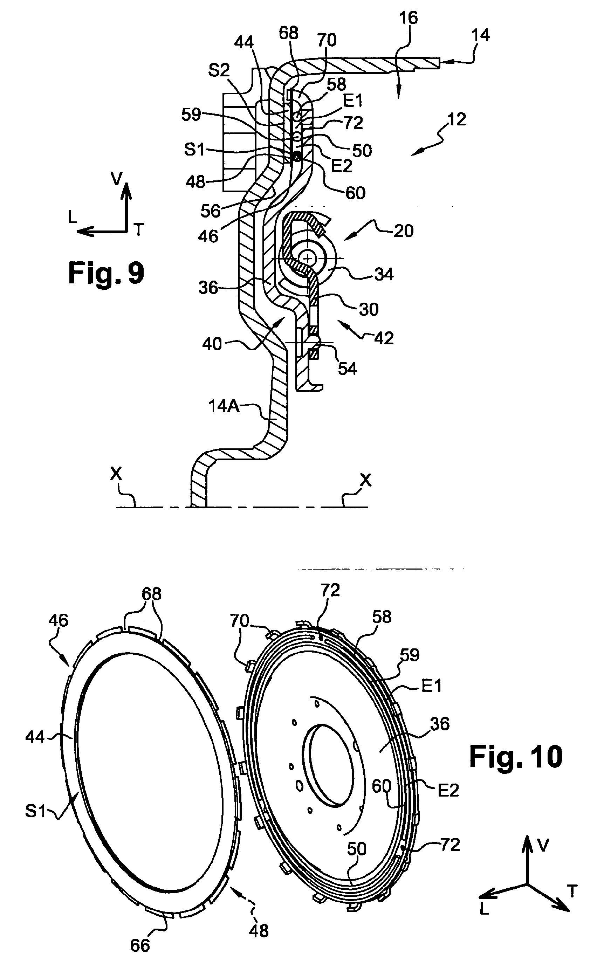

- la figure 9 est une vue en coupe axiale qui représente partiellement un appareil d'accouplement hydrocinétique analogue à celui de la figure 7 et qui illustre un cinquième exemple de réalisation dans lequel les moyens d'ouverture associés aux cordons de progressivité sont respectivement constitués par des trous traversant axialement le piston et débouchant dans au moins un espace annulaire et par des orifices de passage qui, réalisés à la faveur des interruptions circonférentielles de l'un des cordons, sont aptes à permettre la variation de pression dans au moins l'autre espace annulaire ;
- la figure 10 est une vue éclatée en perspective qui représente l'embrayage de verrouillage et qui illustre en détail les moyens d'ouverture mixtes associés aux moyens de progressivité selon le cinquième exemple de réalisation représenté à la figure 9 ;

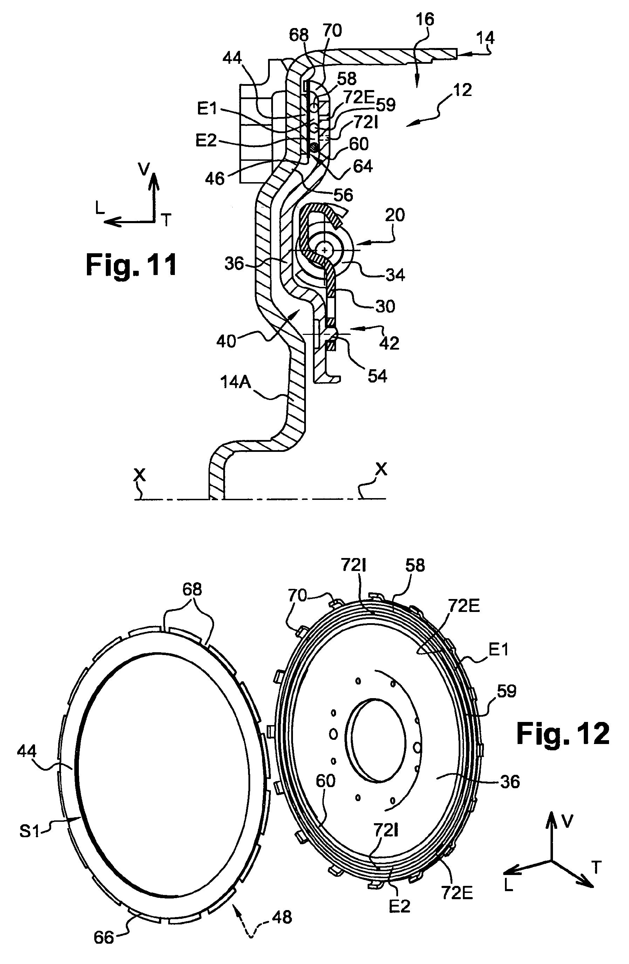

- la figure 11 est une vue en coupe axiale qui représente partiellement un appareil d'accouplement hydrocinétique analogue à celui de la figure 7 et qui illustre un sixième exemple de réalisation des moyens de progressivité constitués par trois cordons dont l'un au moins présente une raideur élastique différente de la raideur de l'autre cordon ;
- la figure 12 est une vue éclatée en perspective qui représente l'embrayage de verrouillage et qui illustre le sixième exemple de réalisation représenté à la figure 11 dans lequel les moyens d'ouverture associés aux cordons de progressivité sont constitués par des trous traversant axialement le piston et débouchant respectivement dans chaque espace annulaire pour permettre la variation de pression ;

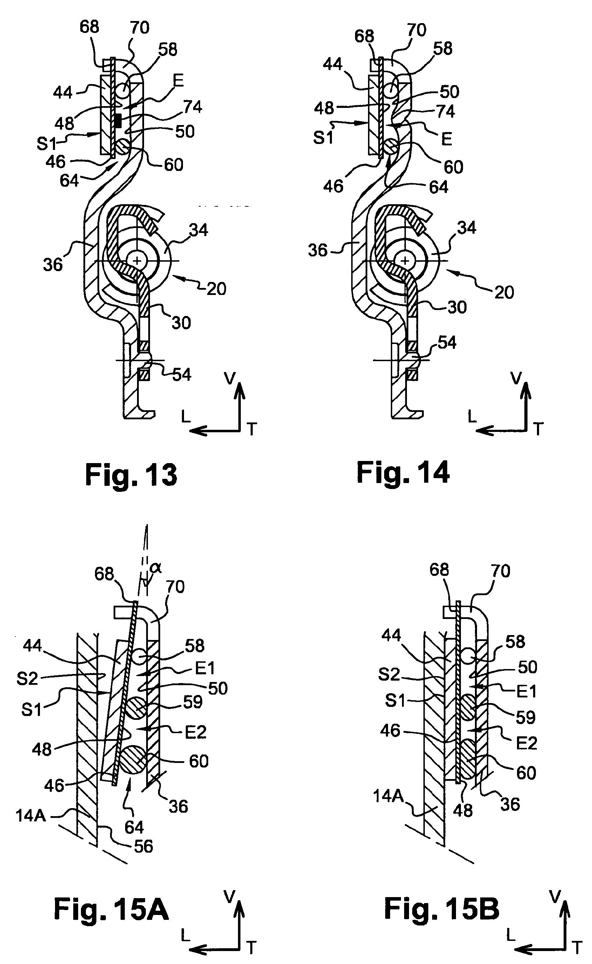

- la figure 13 est une vue en coupe axiale qui représente en détail un embrayage de verrouillage d'appareil d'accouplement hydrocinétique et qui illustre un septième exemple de réalisation dans lequel les moyens de progressivité sont constitués par deux cordons concentriques dont la déformation élastique est limitée par des moyens de butée axiale rapportés solidairement sur le disque de friction et agencés radialement dans l'espace annulaire délimité par les cordons ; la figure 14 est une vue en coupe axiale qui, analogue à la figure 13, représente en détail l'embrayage de verrouillage et qui illustre un huitième exemple de réalisation dans lequel les moyens de progressivité sont constitués par deux cordons concentriques dont la déformation élastique est limitée par des moyens de butée axiale formés par un embouti qui, réalisé dans piston, s'étend axialement dans l'espace annulaire délimité par les cordons ;
- les figures 15A et 15B sont des vues en coupe axiale qui représentent partiellement un appareil d'accouplement hydrocinétique analogue à celui de la figure 7 et qui illustrent, respectivement en position de repos et de fonctionnement (pontage) de l'embrayage de verrouillage, un neuvième exemple de réalisation des moyens de progressivité dans lequel les cordons présentent en coupe une section croissante selon la direction radiale et une orientation de l'intérieur vers l'extérieur propre à incliner d'un angle déterminé la garniture de frottement portant la première surface de frottement ;

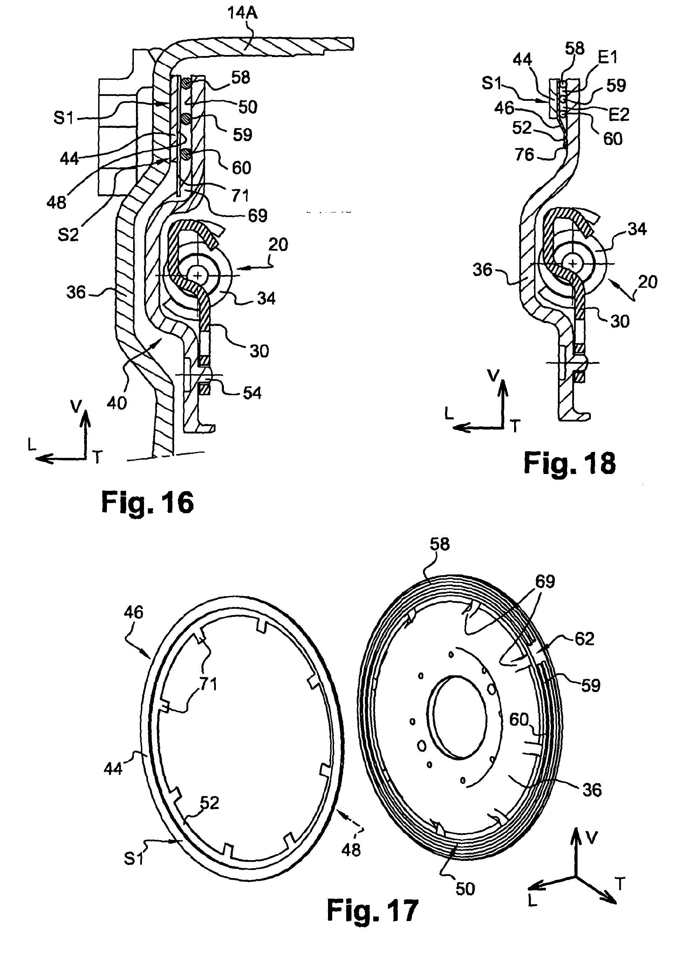

- la figure 16 est une vue en coupe axiale qui représente partiellement un appareil d'accouplement hydrocinétique et qui illustre une variante des moyens de liaison par engrènement similaires à ceux de la figure 7 et un dixième exemple de réalisation dans lequel les moyens de progressivité sont interposés axialement entre le piston et la face proximale d'appui d'un premier élément formé directement par une garniture de frottement munie à sa périphérie radiale interne de moyens de liaison, tels que des pattes, aptes à réaliser directement la liaison en rotation avec le piston formant l'élément adjacent ;
- la figure 17 est une vue en perspective qui représente en éclaté les moyens de progressivité agencés, selon le dixième exemple de réalisation de la figure 16, entre le piston et une garniture de frottement et qui illustre des moyens d'étanchéité formé par l'un interne des cordons ;
- la figure 18 est une vue en coupe axiale qui représente partiellement un embrayage de verrouillage d'appareil d'accouplement hydrocinétique de type monoface analogue à celui de la figure 1 et qui illustre une variante de réalisation selon laquelle les moyens de liaison en rotation entre le piston et le disque de friction sont réalisés par soudage, de préférence sous le forme d'un cordon de soudure circulaire qui forme les moyens d'étanchéité ;

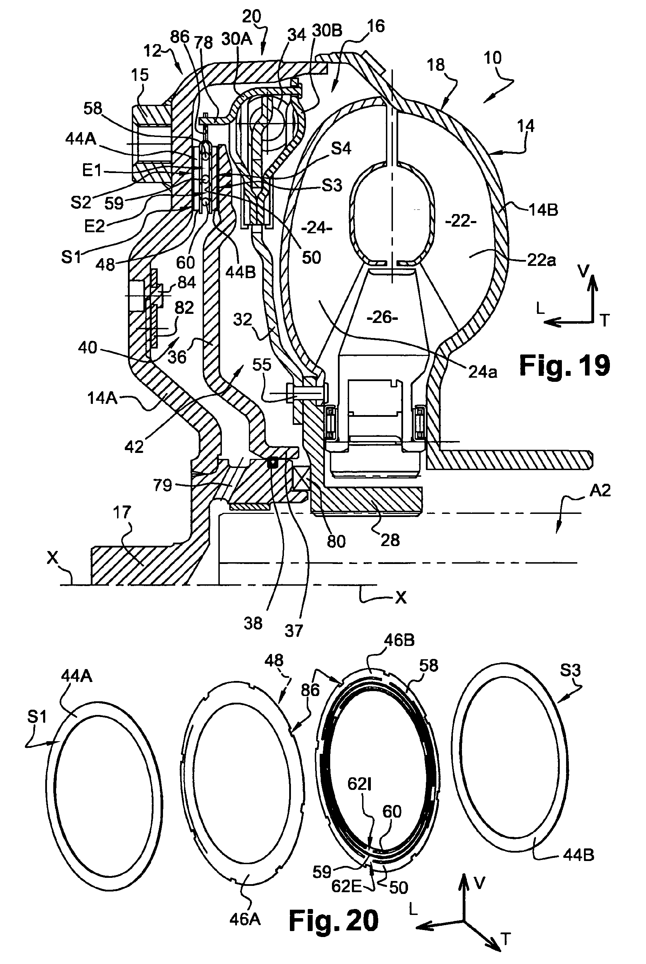

- la figure 19 est une demi vue en coupe axiale qui représente un appareil d'accouplement hydrocinétique équipé, selon une deuxième application, d'un embrayage de verrouillage de type bifaces et qui illustre un troisième mode de réalisation des moyens de progressivité selon l'invention constitués par trois cordons interposés axialement entre deux disques de friction qui, portant respectivement une garniture de frottement, sont destinés à être serrés par le piston contre la deuxième coquille du carter et sont liés en rotation à l'élément d'entrée d'un amortisseur ;
- la figure 20 est une vue en perspective qui représente en éclaté, selon le troisième mode de réalisation de la figure 19, les disques de friction entre lesquels sont interposés les moyens de progressivité ;

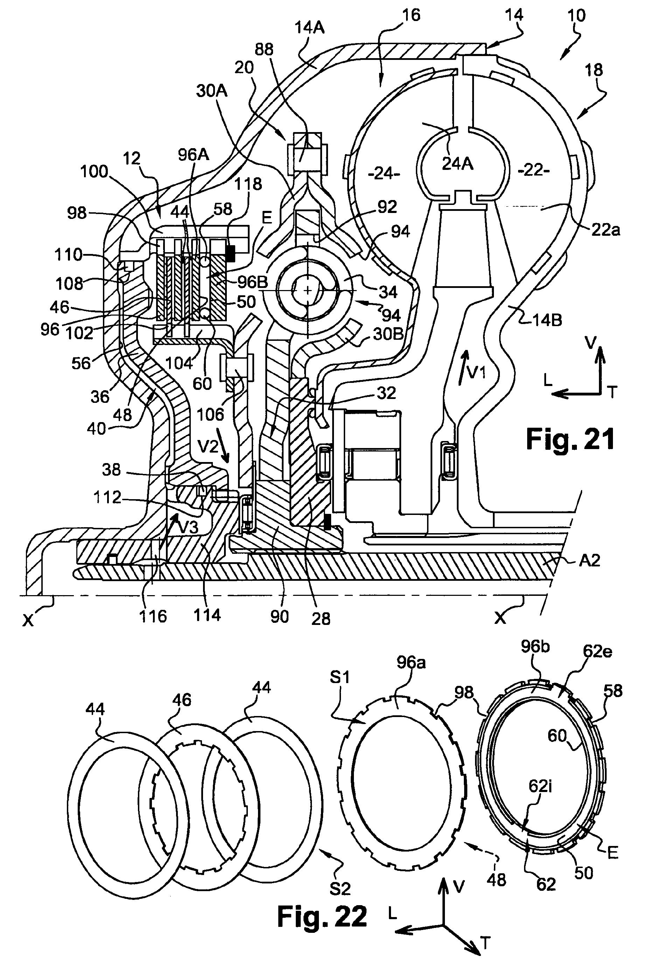

- la figure 21 est une demi vue en coupe axiale qui représente un appareil d'accouplement hydrocinétique équipé, selon une troisième application, d'un embrayage de verrouillage de type multi-disques et qui illustre un quatrième mode de réalisation dans lequel les moyens de progressivité selon l'invention constitués par deux cordons interposés axialement entre les deux parties d'un flasque de l'embrayage ;
- la figure 22 est une vue en perspective qui représente en éclaté le quatrième mode de réalisation de la figure 21 dans lequel le premier élément et l'élément adjacent sont formés par les deux parties du flasque entre lesquelles sont interposés les moyens de progressivité ;

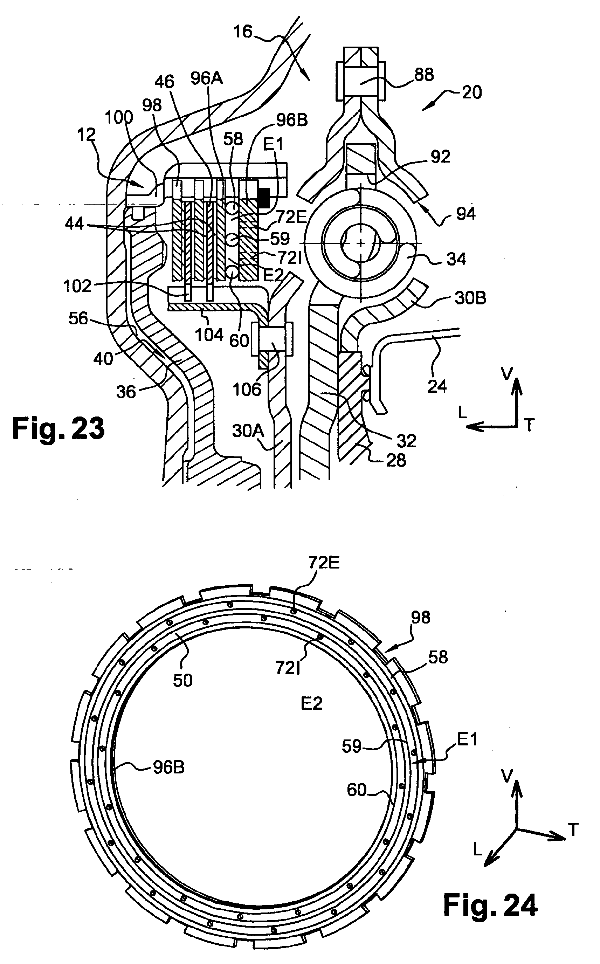

- la figure 23 est une vue en coupe axiale qui, dans le cas du quatrième mode, représente en détail un onzième exemple de réalisation des moyens de progressivité constitués par trois cordons concentriques et qui illustre des moyens d'ouverture associés à chaque espace annulaire et formés par deux séries de trous traversant axialement la partie du flasque constituant l'élément adjacent ;
- la figure 24 est une vue en perspective qui représente l'un des flasques et illustre en détail les moyens de progressivité selon le onzième exemple de réalisation illustré à la figure 23 ;

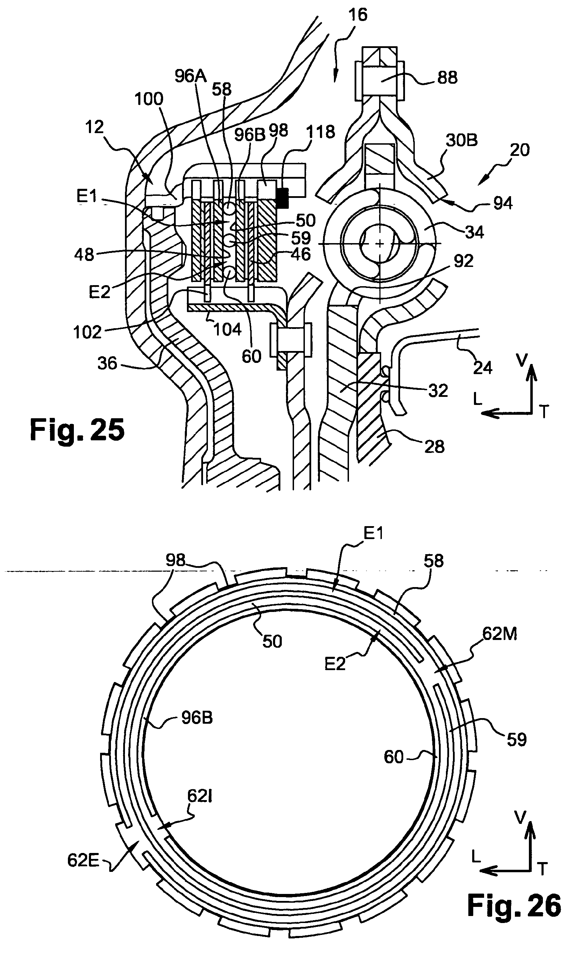

- la figure 25 est une vue en coupe axiale qui représente en détail un douzième exemple de réalisation des moyens de progressivité constitués par trois cordons concentriques discontinus pour former des moyens d'ouverture associés à chaque espace annulaire et agencés centralement dans l'embrayage de verrouillage ;
- la figure 26 est une vue de face qui représente l'un des flasques et illustre les moyens de progressivité selon le douzième exemple de réalisation illustré à la figure 25 ;

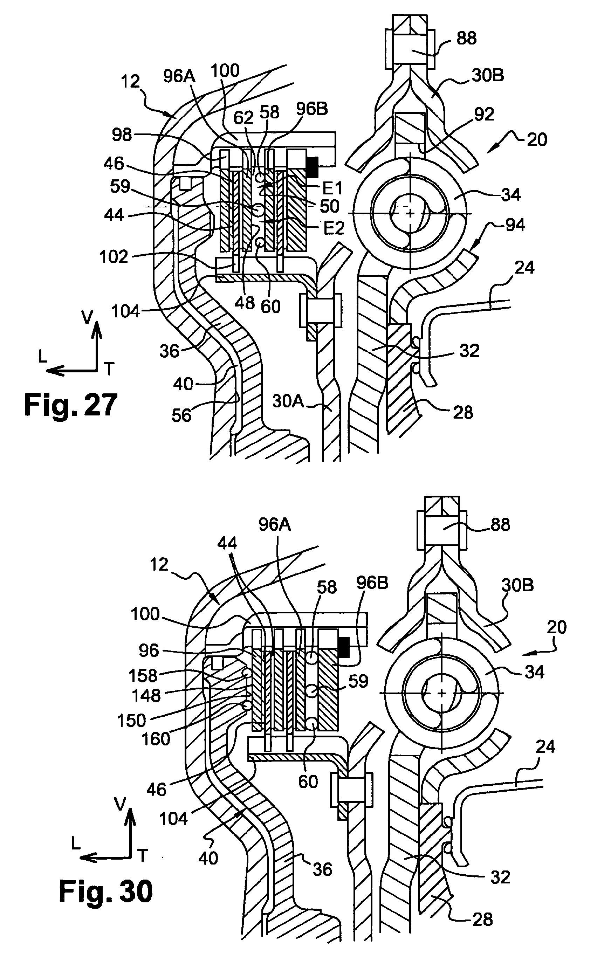

- la figure 27 est une vue en coupe axiale qui représente en détail un treizième exemple de réalisation des moyens de progressivité constitués par trois cordons concentriques présentant, en coupe, une section différente ;

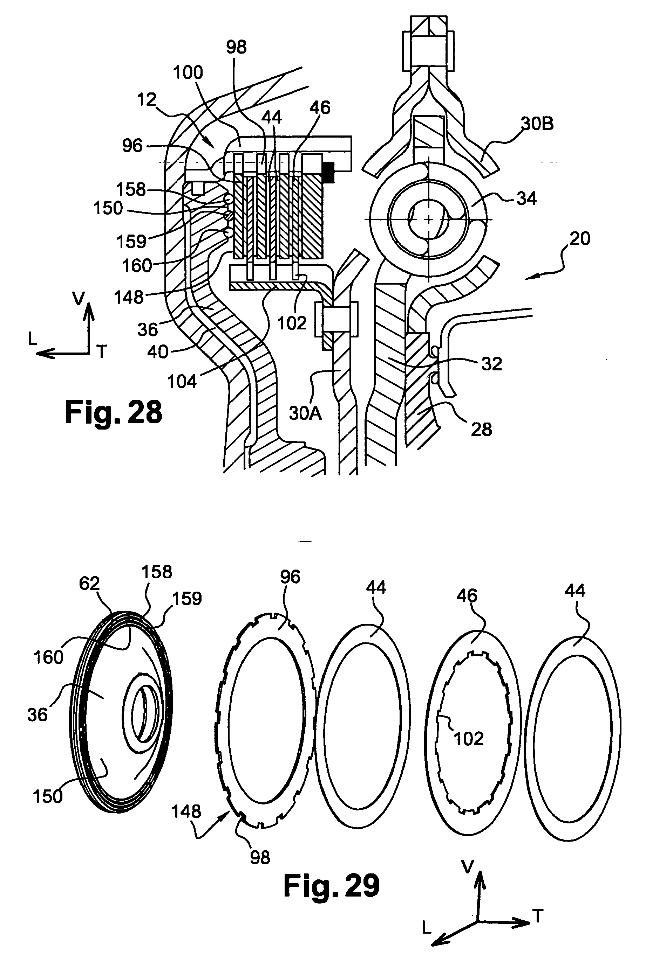

- la figure 28 est une vue en coupe axiale qui représente en détail un quatorzième exemple de réalisation dans lequel les moyens de progressivité sont constitués par trois cordons concentriques interposés axialement entre le piston et le flasque adjacent ;
- la figure 29 est une vue en perspective qui représente en éclaté les moyens de progressivité selon le quatorzième exemple de réalisation illustré à la figure 28 ;
- la figure 30 est une vue en coupe axiale qui représente un quinzième mode de réalisation dans lequel l'embrayage de verrouillage comporte des moyens de progressivité interposés axialement d'une part entre le piston et le flasque adjacent et, d'autre part, entre les deux parties du flasque situé à l'opposé.

Dans la description et les revendications, on utilisera à titre non limitatif et afin d'en faciliter la compréhension, les termes « avant » ou « arrière », « supérieur » ou « inférieur », « externe » ou « interne », etc. ainsi que les orientations « axial » ou « radial » pour désigner des éléments selon les définitions données dans la description et par rapport aux directions longitudinale, verticale et transversale du trièdre (L, V, T) représenté sur les figures.

Dans la description, les éléments identiques, similaires ou analogues seront désignés par les mêmes chiffres de référence.

On a représenté à la figure 1, un appareil d'accouplement hydrocinétique 10, notamment pour un véhicule automobile, comportant selon une première application un embrayage de verrouillage 12, encore appelé "lock-up" en terminologie anglaise, qui est de type "monoface".

L'embrayage de verrouillage 12 est généralement désigné ainsi en raison du fait qu'il ne comporte qu'une seule garniture de frottement et cela par comparaison aux deuxième et troisième applications décrites ultérieurement, en relation avec les figures 19 et suivantes, pour lesquelles l'embrayage de verrouillage 12 comporte respectivement deux et plus de deux garnitures de frottement, d'où il s'en suit les désignations associées de type "bifaces" et de type "multifaces".

L'embrayage de verrouillage 12 de type "monoface" pour appareil d'accouplement hydrocinétique 10 ne constitue par conséquent qu'un exemple possible et non limitatif d'application de l'invention.

L'appareil d'accouplement hydrocinétique 10 comporte un axe principal X-X de rotation autour duquel sont disposés les différentes pièces.

Par convention, les orientations « avant » et « arrière » correspondent respectivement à la gauche et à la droite de la figure 1 suivant l'axe de rotation X-X qui, s'étendant longitudinalement, détermine l'orientation « axiale » par opposition à l'orientation « radiale » qui lui est orthogonale et qui s'étend verticalement selon le trièdre (L, V, T).

Les termes « extérieur ou externe » et « intérieur ou interne » sont utilisés pour définir la position relative d'un élément par rapport à un autre selon l'orientation radiale correspondant à la direction verticale et, par référence à l'axe principal de rotation X-X, un élément proche de l'axe X-X est ainsi qualifié d'interne par opposition à un élément externe -qui-est-situé radialement en périphérie.

L'appareil d'accouplement hydrocinétique 10 comporte un carter étanche 14 formé respectivement d'une première coquille arrière 14B et d'une deuxième coquille avant 14A, qui sont de préférence assemblées par soudage.

Les coquilles arrière 14B et avant 14A du carter 14 délimitent un volume interne 16 de l'appareil 10 à l'intérieur duquel sont principalement agencés un convertisseur de couple 18, l'embrayage de verrouillage 12 et un dispositif d'amortissement 20.

Le convertisseur de couple 18 comporte une roue d'impulseur arrière 22, une roue de turbine avant 24 et, de préférence, une roue de réaction centrale 26.

La roue d'impulseur 22 comporte des aubes 22a qui sont portées par la première coquille arrière 14B de carter, laquelle est solidaire en rotation de la deuxième coquille avant 14A du carter 14, par exemple par soudage.

La deuxième coquille avant 14A est ici apte à être liée en rotation à un arbre menant (non représenté) notamment par l'intermédiaire de moyens de couplage comportant d'une part des moyens de liaison 15 formant écrou et, d'autre part, un organe de centrage 17.

Les moyens de liaison 15 sont par exemple rapportés par soudage sur la face radiale avant de la deuxième coquille avant 14A et sont destinés à recevoir des vis pour assurer la fixation de l'appareil 10 avec un flasque ou volant flexible (non représenté) du moteur.

La deuxième coquille avant 14A étant solidaire en rotation de la première coquille arrière 14B, on assure ainsi la liaison entre l'arbre menant et la roue d'impulseur 22 du convertisseur.

La roue de turbine 24 comporte des aubes 24a qui font face axialement aux aubes 22a de la roue d'impulseur 22 afin d'assurer l'entraînement en rotation de la roue de turbine 24 par la roue d'impulseur 22 grâce à la circulation entre les aubes 22a, 24a d'un fluide contenu dans le carter 14, en général de l'huile.

La roue de turbine 24 est liée en rotation à un arbre mené A2 (représenté en trait pointillé) qui est coaxial à l'axe principal X-X de l'appareil 10, ladite liaison en rotation étant une liaison sans jeu réalisée par l'intermédiaire d'au moins une pièce intermédiaire avantageusement apte à être liée en rotation à l'arbre mené A2 et à la roue de turbine 24 respectivement.

De préférence, ladite pièce intermédiaire est constituée par un moyeu de turbine 28 qui assure la liaison en rotation de la roue de turbine 24 avec l'arbre mené A2.

Dans le cas d'une application à un véhicule automobile, l'arbre menant est constitué par le vilebrequin du moteur à combustion interne du véhicule, tandis que l'arbre mené A2 est constitué par l'arbre d'entrée de la transmission du véhicule, conventionnellement relié à des moyens de changement de rapport de vitesses.

Le moyeu de turbine 28 présente globalement, en coupe axiale, une forme en "L" comportant une partie d'orientation radiale et une partie d'orientation axiale. L'extrémité radialement intérieure de la coquille de la roue de turbine 24 est fixée par rivetage, en variante par soudage, sur l'extrémité de la partie d'orientation radiale du moyeu 28.

De préférence, la partie d'orientation radiale du moyeu 28 présente à son extrémité libre d'une part un premier lamage arrière pour le centrage de l'extrémité de la coquille de la roue de turbine 24 et, d'autre part, un deuxième lamage avant de manière que les têtes de rivets soient comprises axialement dans la profondeur du lamage et ne s'étendent pas axialement en saillie vers l'avant.

L'entraînement en rotation entre le moyeu de turbine 28 et l'arbre mené A2 est réalisé conventionnellement par coopération de formes entre des rainures et des cannelures axiales ménagées respectivement sur l'un et/ou l'autre.

Avantageusement, l'arbre mené A2 comporte à son extrémité axiale avant un chanfrein destiné notamment à faciliter le montage de moyens d'étanchéité interposés radialement entre le moyeu de turbine 28 et l'arbre A2, axialement en avant de la portion d'engrènement entre les rainures et les cannelures.

Avantageusement, l'appareil d'accouplement hydrocinétique 10 comporte encore le dispositif d'amortissement ou amortisseur 20 qui est interposé axialement entre le convertisseur de couple 18 et l'embrayage de verrouillage 12.

La réalisation d'un tel amortisseur 20 est susceptible de varier en fonction des applications, y compris son agencement ce qu'illustre par exemple, dans le cas de la première application avec un embrayage de verrouillage 12 monoface, une comparaison entre les figures 1 et 7.

Toutefois et indépendamment de son agencement, un tel amortisseur 20 comporte principalement un élément d'entrée 30 et un élément de sortie 32 entre lesquels sont interposés des organes élastiques 34 à action circonférentielle.

Généralement, l'élément d'entrée 30 et l'élément de sortie 32 de l'amortisseur 20 sont constitués par des pièces respectivement désignées comme rondelle(s) de guidage et voile, ou vice et versa.

Dans l'exemple de réalisation représenté à la figure 1, l'amortisseur 20 comporte un élément d'entrée 30 constitué par une pièce d'entraînement et de guidage solidaire du piston 36, ici par rivetage, et un élément de sortie 32 constitué par une autre pièce munie de pattes qui est solidaire, ici par soudage, d'une portion sommitale de la coquille de la roue de turbine 24.

Les organes élastiques 34 à action circonférentielle sont interposés entre les éléments d'entrée 30 et de sortie 32 de l'amortisseur et sont par exemple formés par des ressorts à boudin, précintrés ou non.

L'élément d'entrée 30 comprend d'une part, une première portion radialement intérieure en forme d'anneau plat qui est rivetée sur le piston 36 pour en assurer la fixation et la liaison en rotation et, d'autre part, une deuxième portion globalement en forme de demi-tore qui s'étend en majeure partie dans l'espace délimité radialement à l'extérieur par le piston 36.

La deuxième portion de l'élément d'entrée 30 présente, en coupe axiale, un profil en C déterminant une concavité ouverte axialement vers l'avant en direction de la deuxième coquille avant 14A du carter et formant une gorge circonférentielle dans laquelle sont reçus les organes élastiques 34 à action circonférentielle.

Comme on peut le voir sur la figure 1, la deuxième portion de l'élément d'entrée 30 comporte des ouvertures pour permettre le passage axial des pattes formant l'élément de sortie 32 lié à la coquille de la roue de turbine 24.

Les organes élastiques 34 sont guidés circonférentiellement et retenus axialement par l'élément d'entrée 30. Les organes élastiques 34 sont interposés entre les pattes de l'élément de sortie 32 et d'autres séries de paires de pattes d'entraînement qui, constituant un double appui, sont formées de manière connues par découpe et/ou emboutissage dans la deuxième portion de l'élément d'entrée 30.

Avantageusement, les pattes formant l'élément de sortie 32 comportent, au niveau des zones en contact avec les organes élastiques 34, des plots de centrage et de maintien qui pénètrent à l'intérieur des spires d'extrémité de chaque organe élastique 34.

L'embrayage de verrouillage 12 de type monoface (figure 1) comporte principalement un piston 36 qui est monté mobile axialement et qui est destiné à lier, de manière débrayable, la deuxième coquille avant 14A du carter 14 à l'arbre mené A2.

On rappellera succinctement que le fonctionnement de l'appareil d'accouplement hydrocinétique 10 comporte une première phase de fonctionnement, dite « phase convertisseur » et une seconde phase, dite « phase de couplage ».

Lors de la phase convertisseur, le couple de l'arbre menant est transmis par le carter 14 à la roue d'impulseur 22 qui entraîne, par circulation d'huile entre les aubes 22a et 24a, la roue de turbine 24.

Durant cette phase convertisseur, l'amortisseur 20-n'intervient pratiquement pas dans l'amortissement des vibrations ou oscillations de torsion dues principalement aux acyclismes du moteur (non représenté) comportant l'appareil 10.

En effet, les vibrations ou oscillations de torsion sont filtrées dans l'huile par le convertisseur 18 puisque la transmission du couple moteur est réalisée par l'intermédiaire de l'énergie cinétique de l'huile dans le convertisseur 18.

Dans l'exemple de réalisation de la figure 1, l'amortisseur 20 n'intervenant pas, le couple de la roue de turbine 24 est directement transmis à l'arbre mené A2 via le moyeu de turbine 28.

Lors de la phase de couplage, le piston 36 est déplacé axialement de l'arrière vers l'avant sous l'action d'une différence de la pression de l'huile s'appliquant de part et d'autre du piston 36 de manière à serrer axialement les unes contre les autres des surfaces de frottement S1, S2.

L'embrayage de verrouillage 12 est généralement commandé après le démarrage du véhicule et après le couplage hydraulique des arbres menant et mené A2, pour éviter la perte de rendement induite notamment par les phénomènes de glissement se produisant entre les roues d'impulseur 22 et de turbine 24.

On décrira maintenant plus en détails l'embrayage de verrouillage 12 et l'amortisseur 20 représentés sur la figure 1.

Le piston 36 est monté mobile axialement par rapport à la partie d'orientation axiale du moyeu de turbine 28, laquelle partie s'étend axialement en avant de l'autre partie d'orientation radiale solidaire de l'extrémité de la roue de turbine 24.

Le piston 36 comporte à sa périphérie interne une première portion en forme de L, semblable à celle du moyeu 28, dont la partie d'orientation axiale constitue une virole 37 qui s'étend axialement vers l'avant et coopère avec un moyen d'étanchéité 38, tel qu'un segment ou un joint.

Le moyen d'étanchéité 38 est interposé entre la surface interne de coulissement du piston 36 formée par la virole 37 et la surface en vis-à-vis du moyeu 28, de manière à assurer l'étanchéité entre une première chambre, dite chambre de commande 40 et une seconde chambre, dite chambre de turbine 42.

Le moyen d'étanchéité 38 est, ici porté par le moyeu 28, en variante par le piston 36, et logé dans une gorge annulaire du moyeu 28 qui comporte de préférence un chanfrein terminal afin de faciliter le montage par emboîtement du moyen d'étanchéité 38 dans la gorge.

Tel que représenté à la figure 1, le piston 36 s'étend globalement radialement vers l'extérieur par l'autre partie radiale du L de la première portion, puis par une seconde portion intermédiaire, ici en forme de V couché et qui épouse sensiblement la forme de la deuxième coquille avant 14A du carter et se termine par une troisième portion encore en forme de L comportant une partie radiale et une partie axiale qui, s'étendant vers l'arrière, forme une jupe de rigidification 39.

Le piston 36 est apte à être commandé sélectivement pour procéder au pontage, c'est-à-dire le déplacement du piston 36 vers sa position de fonctionnement dans laquelle le piston serre axialement au moins une première surface de frottement S1 que comporte un premier élément contre une deuxième surface de frottement S2 associée que comporte un deuxième élément.

Sur la figure 1, ledit premier élément est constitué respectivement par une garniture de frottement 44 comportant la première surface de frottement S1 et par un disque de friction 46 sur l'une avant des faces duquel la garniture de frottement 44 est rapportée à fixation, notamment par collage, et dont la face arrière, axialement opposée, constitue une face proximale d'appui 48.

En variante, le disque de friction 46 est supprimé et le premier élément est constitué par la seule garniture de frottement 44 comportant une première face formant la première surface de frottement S1 et une deuxième face opposée formant la face proximale d'appui 48.

Le disque de friction 46 comporte des moyens de liaison aptes à coopérer avec des moyens de liaison complémentaires pour lier solidairement en rotation, sans jeu circonférentiel, le premier élément formé par la garniture de frottement 44 et le disque de friction 46 à un élément adjacent formé par le piston 36, ledit élément adjacent comportant une face distale d'appui 50.

De préférence, le disque de friction 46 comporte une portion interne 52 en forme d'anneau qui s'étend circonférentiellement de manière continue, radialement en dessous d'une portion externe sur laquelle la garniture de frottement 44 est rapportée à fixation.

Avantageusement, la portion interne 52 et la portion externe du disque de friction 46 ne sont pas coplanaires, lesdites portions étant reliées radialement entre elles par une portion intermédiaire oblique formant un pli.

La portion annulaire interne 52 est apte à être fixée au piston 36 par rivetage au moyen de rivets 54 qui sont de préférence répartis circonférentiellement de manière régulière. Les rivets 54 assurent la liaison en rotation entre le premier élément 44, 46 et l'élément adjacent 36.

Avantageusement, les rivets 54 assurent aussi la liaison en rotation de l'élément d'entrée 30 de l'amortisseur 20 avec le piston 36.

La portion externe du disque de friction 46 portant la garniture de frottement 44 est, du fait de la portion intermédiaire oblique, décalée axialement vers l'avant par rapport à la portion interne 52 de manière à créer un jeu axial donné entre la face proximale 48 et la face distale 50, respectivement portée par le disque de friction 46 et par le piston 36.

Sur la figure 1, ledit deuxième élément est constitué par la deuxième coquille avant 14A du carter dont une paroi 56 arrière comporte une portion périphérique externe qui, s'étendant radialement et axialement en vis-à-vis de la première surface de frottement S1, forme la deuxième surface de frottement S2 complémentaire contre laquelle ladite première surface de frottement S1 est sélectivement serrée par le-piston 36 selon que l'embrayage de verrouillage 12 est en position de fonctionnement (pontage) ou de repos.

Selon les applications, la garniture de frottement 44 est dotée de rainures dont le profil peut varier et qui permettent notamment d'améliorer le refroidissement au voisinage de la deuxième surface de frottement S2 portée par la paroi arrière 56 du carter 14 et de travailler en glissement contrôlé.

Avantageusement, le refroidissement de la deuxième surface de frottement S2 formée par une partie de la paroi arrière 56 s'opère par conduction à travers la deuxième coquille avant 14A de carter dont la paroi avant est généralement en contact avec l'air ambiant entourant le moteur.

On notera que l'arbre mené A2 comporte un alésage axial débouchant à l'extrémité libre avant de cet arbre. Cet alésage communique avec la chambre de commande 40, qui est délimitée axialement par la paroi 56 du carter et le piston 36, et qui est alimentée en huile sous pression par un circuit hydraulique raccordé audit alésage.

Comme indiqué précédemment, en fonctionnement, le couplage des arbres, A2 est tout d'abord établi par la roue d'impulseur 22 et la roue de turbine 24 du convertisseur 18 au cours de la phase convertisseur, puis par l'embrayage de verrouillage 12 qui est activé lors de la phase de couplage de manière que l'arbre menant, qui est relié à la roue d'impulseur 22 par le carter 14, soit solidarisé à l'arbre mené A2 par le moyeu de turbine 28 le reliant à la roue de turbine 24.

La commande du piston 36 de l'embrayage de verrouillage 12 est obtenue en faisant varier la pression de part et d'autre du piston 36, c'est à dire entre la chambre de commande 40 et la chambre de turbine 42, le piston 36 étant déplacé axialement vers l'avant pour établir le pontage ou verrouillage (position de fonctionnement) du piston 36 et de la paroi 56 du carter 14 et, inversement, vers l'arrière pour le dépontage ou déverrouillage (position de repos).

En effet, lorsque le piston 36, mu par-la-pression, se déplace vers l'avant pour serrer la garniture de frottement 44 contre la paroi 56, le couple est alors transmis, au travers de l'amortisseur 20, de la paroi 56 du carter 14 lié à l'arbre menant à la roue de turbine 24 liée à l'arbre mené A2.

C'est précisément lorsque les première et deuxième surfaces de frottement S1 et S2 sont amenées au contact l'une avec l'autre en vue du pontage que se produisent notamment les à-coups précités qui sont préjudiciables au confort et à l'agrément de conduite.

De même que pour des raisons détaillées précédemment, des phénomènes tels que la mise en cône du piston 36 ou de gonflement du carter 14 se produisent alors, phénomènes qui se traduisent par des surfaces de contact non coplanaires entre sur la première surface de frottement S1 portée par la garniture de frottement 44 et la deuxième surface de frottement S2 portée par la paroi 56 de la deuxième coquille avant 14A du carter.

C'est la raison pour laquelle, l'embrayage de verrouillage 12 de l'appareil 10 selon l'invention comporte des moyens de progressivité qui, déformables élastiquement selon au moins la direction axiale, sont constitués par au moins un premier cordon 58 formant un premier moyen de progressivité et un second cordon 60 formant un second moyen de progressivité, globalement coaxial au premier cordon 58.

Pour ce faire, les premier et second cordons 58, 60 sont respectivement interposés axialement entre la face proximale d'appui 48 portée par le disque de friction 46 formant le premier élément qui comporte la première surface de frottement S1 et une face distale d'appui 50 portée par le piston 36 formant l'élément adjacent auquel ledit premier élément est lié en rotation par l'intermédiaire de moyens de liaison formés par les rivets 54.

Avantageusement, les moyens de progressivité 58, 60 selon l'invention permettent de résoudre les inconvénients précités en proposant un embrayage de verrouillage 12 notamment susceptible de réduire voir de supprimer les à coups et de garantir une distribution de pression de contact au niveau des surfaces de frottement S1, S2 qui soit optimale et uniforme.

Grâce aux moyens de progressivité 58, 60 selon l'invention, l'embrayage de verrouillage 12 est avantageusement susceptible de compenser les défauts géométriques et les déformations des éléments comme le piston 36 ou le carter 14 dues notamment aux conditions variables de fonctionnement.

Avantageusement, de tels moyens de progressivité d'un embrayage de verrouillage 12 sont aptes à compenser des déformations de l'ordre de 0,3 à 0,5 mm ce qui participe très favorablement à une amélioration du fonctionnement de l'embrayage de verrouillage 12 et de son contrôle ou sa commande en général.

Selon une caractéristique importante de l'invention, les moyens de progressivité 58, 60 comportent des moyens d'ouverture 62 aptes à permettre, lors du serrage par le piston 36, une variation de pression dans un espace E que délimite axialement les faces d'appui proximale 48 et distale 50 et radialement les premier et second cordons 58, 60.

Dans la suite de la présente description, lorsque l'espace E est qualifié d'espace "annulaire", le terme "annulaire" ne doit pas être interprété limitativement comme signifiant circulaire ou toroïdal, la forme de l'espace E étant notamment fonction de la forme des cordons qui l'entourent et le délimitent radialement.

L'espace annulaire E s'étend donc circonférentiellement autour de l'axe principal X-X suivant un parcours en boucle dont les caractéristiques géométriques sont déterminées par celles des cordons de manière que le tracé du parcours peut être par exemple circulaire ou sinueux.

L'espace annulaire E est par conséquent non pas rempli d'air mais d'huile qui est susceptible de circuler par l'intermédiaire desdits moyens d'ouverture 62 de manière à permettre une variation de pression en particulier lors du pontage, c'est-à-dire dire lorsque le piston 36 de l'embrayage de verrouillage 12 est déplacé de sa position de repos vers sa position de fonctionnement.

En effet, la pression appliquée sur la première surface de frottement S1 portée par le piston 36 est susceptible d'atteindre des valeurs maximales de l'ordre de 5 à 7 bars selon les applications.

Par conséquent, si l'espace annulaire E était fermé, par exemple radialement par deux cordons 58, 60 continus, d'importants efforts s'exerceraient alors sur les cordons 58, 60 du fait de l'application de la pression pour le pontage et ces efforts appliqués circonférentiellement sur chacun d'eux provoqueraient à tout le moins une détérioration, voire une rupture, des cordons 58, 60, en particulier par fluage du matériau constituant lesdits cordons.

L'appareil 10 comporte encore des moyens d'étanchéité 64 aptes à permettre d'établir, pour l'embrayage de verrouillage monoface 12, la pression de commande requise pour déplacer axialement le piston 36 vers sa position de fonctionnement, dite de pontage, dans laquelle les surfaces de frottement S1 et S2 coopèrent pour assurer le couplage des arbres menant et mené A2.

Avantageusement, les moyens d'étanchéité 64 sont constitués par la portion interne 52 du disque de friction 46 fixée au piston 36 par les rivets 54 formant les moyens de liaison.

Avantageusement, les rivets destinés à lier en rotation le premier élément comportant la face proximale d'appui 48, soit le disque de friction 46 portant la garniture de frottement 44, et l'élément adjacent comportant la face distale d'appui 50, soit le piston 36, exercent un effort radial tel que chaque zone de fixation est parfaitement étanche.

En variante, la liaison en rotation entre le premier élément, formé par la garniture de frottement 44 et le disque de friction 46, et l'élément adjacent est réalisée par soudage, par exemple par un cordon de soudure circulaire, circonférentiellement continu, de manière à assurer l'étanchéité entre les chambres 40 et 42 lors du pontage.

En variante non représentée, lorsque la liaison en rotation entre le premier élément, formé par la garniture de frottement 44 et le disque de friction 46, et l'élément adjacent est réalisée par engrènement, des moyens d'étanchéité distincts sont alors nécessaires.

Avantageusement, de tels moyens d'étanchéité sont constitués par un organe d'étanchéité, tel qu'un joint ou tout autre moyen approprié.

Avantageusement, un tel organe d'étanchéité doit permettre d'isoler les chambres 40 et 42 lorsque le piston 36 est en position de fonctionnement.

Lorsque la liaison par engrènement est réalisée à la périphérie extérieure, l'organe d'étanchéité est de préférence interposé radialement axialement entre la face proximale d'appui 48 du premier élément, par exemple le disque de friction 46 portant la garniture de frottement 44, et la face distale d'appui 50 de l'élément adjacent, par exemple le piston 36.

Un tel organe d'étanchéité est donc alors agencé radialement à l'intérieur tant des moyens de progressivité formés par exemple par les premier et second cordons 58, 60 dont il est distinct, que des moyens de liaison en rotation par engrènement du premier élément 44, 46 avec l'élément adjacent 36.

De préférence, l'organe d'étanchéité est un joint à lèvre(s) dont le corps est reçu dans une rainure complémentaire que comporte l'élément adjacent formé par exemple par le piston 36 de manière que la ou les lèvres coopèrent avec la face radiale arrière située axialement en vis-à-vis appartenant au premier élément, soit le disque de friction 46 ou la garniture de frottement 44.

En variante, les moyens d'étanchéité sont constitués au moins par le second cordon 60 qui est interposé axialement entre la face proximale d'appui 48 portée par le premier élément 44, 46 qui comporte la première surface de frottement S1 et la face distale d'appui 50 portée par l'élément adjacent 36 au premier élément 44, 46.

De préférence, le second cordon 60 des moyens de progressivité est alors circonférentiellement continu pour assurer la fonction de moyen d'étanehéité 64, en variante au moins l'un des cordons 58, 60 est continu pour former un moyen d'étanchéité 64.

De préférence, lorsque les moyens d'étanchéité sont formés par le second cordon 60, le second cordon 60 est réalisé dans le même matériau élastomère que les moyens de progressivité déformables élastiquement formés par au moins le premier cordon 58.

En variante, lorsque les moyens d'étanchéité sont formés par les moyens de progressivité, des matériaux élastomères différents sont utilisés pour réaliser le cordon assurant exclusivement une fonction de progressivité d'une part, et le cordon assurant au moins la fonction d'étanchéité.

Dans le premier exemple de réalisation des moyens de progressivité illustré à la figure 2, les premier et second cordons 58, 60 formant les moyens de progressivité sont respectivement réalisés sous la forme de cordon circonférentiellement discontinu et sont chacun constitués de quatre portions curvilignes, de préférence en arc de cercle.

Chaque cordon 58, 60 comporte entre deux portions consécutives un orifice radial de passage 62 formant lesdits moyens d'ouverture, respectivement des orifices de passage 62E dans le premier cordon 58 radialement à l'extérieur et des orifices de passage 62I dans le second cordon 60 radialement à l'intérieur.

Les portions en arc de cercle formant respectivement le premier cordon 58 et le second cordon 60 sont par exemple au nombre de quatre, ainsi que le nombre d'orifices radial de passage 62E, 62I ménagés dans chacun des cordons 58, 60.

De préférence, les portions en arc de cercle formant respectivement le premier cordon 58 et le second cordon 60 sont d'égale longueur entre elles et d'un cordon à l'autre.

Avantageusement, les portions en arc de cercle formant respectivement le premier cordon 58 et le second cordon 60 sont réparties circonférentiellement de manière régulière sur le pourtour du piston 36 formant l'élément adjacent et les portions du premier cordon 58 sont décalées angulairement par rapport aux portions du second cordon 60 de manière que les orifices radiaux de passage de l'un et de l'autre ne soient pas alignés selon la direction radiale.

De préférence, le décalage angulaire entre les portions en arc de cercle de chacun des cordons 58, 60 est déterminé de manière qu'un orifice radial de passage 62E, 62I de l'un débouche radialement au milieu d'une des portions en arc de cercle de l'autre.

Le second cordon 60 est coaxial au premier cordon 58 de sorte que le second cordon 60 est agencé radialement à l'intérieur dudit premier cordon 58.

Avantageusement, les moyens de progressivité 58, 60 déformables élastiquement sont réalisés en un matériau élastomère, telle qu'une silicone thixotrope, présentant des caractéristiques stables lorsqu'il est immergé dans l'huile contenue dans le volume interne 16 du carter 14 de l'appareil d'accouplement hydrocinétique 10.

De préférence, au moins les moyens de progressivité 58, 60 sont réalisés en un matériau choisi parmi les fluoro-silicones qui sont particulièrement adaptées pour de telles applications dans l'huile.

Avantageusement, le matériau élastomère des moyens de progressivité 58, 60 est apte à être adhérisé directement par polymérisation avec l'une et/ou l'autre des faces d'appui proximale 48 du premier élément et distale 50 de l'élément adjacent.

De préférence, la polymérisation du matériau élastomère est obtenue par chauffage, pendant une durée déterminée, par exemple comprise entre 2 et 12 minutes, à une température supérieure ou égale à une température donnée dite de polymérisation, par exemple de l'ordre de 150°C.

Avantageusement, le chauffage permet généralement de réduire le temps de polymérisation du matériau élastomère. En variante, la polymérisation du matériau élastomère est réalisée à froid, c'est-à-dire à température ambiante. Bien entendu, le choix du procédé pour réaliser la polymérisation est fonction du type de matériau élastomère.

En variante, le matériau étastomère formant les moyens de progressivité est adhérisé à la face proximale d'appui 48 du premier élément et/ou à la face distale d'appui 50 de l'élément adjacent 36 par collage par l'intermédiaire d'une colle apte à lier solidairement le matériau élastomère aux matériaux respectifs du premier élément formé notamment par le disque de friction 46 ou directement par la garniture de frottement 44 et de l'élément adjacent formé par le piston 36 ou par la paroi 56 de la deuxième coquille avant 14A du carter.

Avantageusement, les moyens de progressivité déformables élastiquement formés par les cordons 58 et 60 selon le premier exemple de réalisation sont solidaires de chacune des faces d'appui proximale 48 du premier élément et distale 50 de l'élément adjacent.

En variante, les moyens de progressivité déformables élastiquement formés par les cordons 58 et 60 sont respectivement solidaires de l'une seulement des faces proximale 48 et distale 50 d'appui de sorte que les moyens d'ouverture 62 destinés à permettre la variation de pression dans l'espace annulaire E soient constitués, non par des orifices radiaux de passage, mais par le jeu axial ainsi créé entre les moyens de progressivité 58, 60 et l'une des faces proximale 48 et distale 50 d'appui avec laquelle l'un et/ou l'autre des moyens de progressivité n'est pas lié solidairement.

En variante, les moyens d'ouverture 62 destinés à permettre la variation de pression dans l'espace annulaire E sont constitués par au moins un trou traversant axialement le piston 36 de manière à établir une communication entre l'espace annulaire E dans lequel ledit au moins un trou de circulation débouche et le volume intérieur 16 du carter 14 rempli d'huile.

En variante, les moyens d'ouverture 62 destinés à permettre la variation de pression dans l'espace annulaire E sont constitués par au moins un trou traversant axialement le disque de friction 46 et/ou la garniture de frottement 44 de manière à établir une communication entre l'espace annulaire E dans lequel ledit au moins un trou de circulation débouche et le volume intérieur 16 du carter 14 rempli d'huile.

En variante, les moyens d'ouverture 62 destinés à permettre la variation de pression dans l'espace annulaire E sont constitués par au moins un trou traversant axialement le piston 36 et par au moins un trou traversant axialement le disque de friction 46 et/ou la garniture de frottement 44 de manière à établir une communication entre l'espace annulaire E dans lequel ledit au moins un trou de circulation débouche et le volume intérieur 16 du carter 14 rempli d'huile.

Avantageusement, lorsque les moyens d'étanchéité résultent des moyens de liaison choisis tels que les rivets ou un cordon de soudure, les moyens d'ouverture 62 destinés à permettre la variation de pression dans l'espace annulaire E sont alors constitués par au moins un orifice radial de passage réalisé sélectivement dans tout ou partie des cordons 58, 60 formant les moyens de progressivité.

Selon une autre caractéristique importante de l'invention, les moyens d'ouverture 62 sont aptes à établir dans l'espace annulaire E compris radialement entre le premier cordon 58 et le second cordon 60, une circulation d'huile propre à permettre un refroidissement efficace, en particulier un refroidissement de la face proximale d'appui 48 du premier élément formé par le disque de friction 46 auquel est transmis par conduction la chaleur de la première surface de frottement S1 de la garniture de frottement 44 qu'il porte.

De préférence, les cordons 58 et 60 formant les moyens de progressivité présentent, en coupe axiale, une section sensiblement constante de manière que les faces proximale 48 et distale 50 d'appui s'étendent radialement globalement parallèlement entre elles avec un écartement axial "e", compris entre le premier élément 46 comportant la face proximale d'appui et l'élément adjacent 36 comportant la face distale d'appui, sensiblement constant.

En variante, les cordons 58 et 60 présentent, en coupe axiale, une section croissante selon la direction radiale suivant une orientation allant de l'intérieur vers l'extérieur de manière que l'écartement axial "e", compris entre le premier élément comportant la face proximale d'appui et l'élément adjacent comportant la face distale d'appui, augmente suivant la direction radiale pour incliner d'un angle déterminé la garniture de frottement 44.

Le premier élément comportant la première surface de frottement S1 et la face proximale d'appui 48 est incliné d'un angle déterminé par rapport à un plan radial orthogonal à l'axe X-X et la face distale d'appui 50 de l'élément adjacent 36 s'étend radialement orthogonalement à l'axe X-X.

En variante, le premier cordon 58 présente une raideur élastique différente de la raideur élastique du second cordon 60.

En variante, des moyens de butée axiale sont interposés entre les faces proximale 48 et distale 50 d'appui de manière à limiter la déformation élastique des moyens de progressivité 58, 60 suivant la direction axiale.

On décrira maintenant par comparaison avec le premier exemple de réalisation représenté sur les figures 1 et 2, d'autres exemples ou modes de réalisation afin d'illustrer, de manière non limitative et dans le cas d'un embrayage de verrouillage 12 de type monobloc, certaines des variantes précitées.

La figure 3 représente un deuxième exemple de réalisation dans lequel le premier cordon 58 est réalisé en forme de plots qui sont avantageusement répartis circonférentiellement de manière régulière sur la périphérie du piston 36.

De préférence, les plots 58 formant le premier cordon de progressivité présentent une section globalement circulaire.

Le second cordon 60 est réalisé sous la forme d'un cordon ouvert comportant deux portions en demi-cercle qui sont interrompues à chaque extrémité par un orifice radial de passage 62I.

Avantageusement, les moyens d'étanchéité 64 sont obtenus à la faveur de liaison en rotation de la portion annulaire interne 52 du disque de friction 46 avec le piston 36 au moyen de rivets 54.

La figure 4 représente un troisième exemple de réalisation dans lequel le premier cordon 58 est réalisé sous la forme d'un cordon interrompu comportant quatre portions curvilignes qui chacune s'étendent circonférentiellement suivant un motif ondulé, par exemple de type sinusoïdal.

Avantageusement, le second cordon 60 est fermé, c'est à dire continu circonférentiellement, de sorte que les moyens d'ouverture sur l'espace annulaire E sont constitués par les seuls orifices de passage 62E ménagés entre les portions successives du premier cordon 58.

Les figures 5 et 6 représentent un deuxième mode de réalisation dans lequel l'élément adjacent est constitué, non plus par le piston 36, mais par la deuxième coquille avant 14A de carter dont la face radiale arrière, c'est à dire la paroi 56, constitue la face distale d'appui 50.

Le premier élément est formé par le disque de friction 46 dont est solidaire une garniture de frottement 44 comportant la première surface de frottement S1. La première surface de frottement S1 est ici orientée vers l'arrière et est destinée à coopérer avec une deuxième surface de frottement S2 axialement en vis-à-vis qui est formée par la face radiale avant du piston 36 constituant le deuxième élément.

L'embrayage de verrouillage 12 de l'appareil 10 comporte des moyens d'étanchéité aptes à permettre d'établir, entre les chambres 40 et 42, une pression de commande propre à provoquer le déplacement du piston 36, axialement vers l'avant, jusqu'à atteindre la position de fonctionnement (pontage) dans laquelle les première et deuxième surfaces de frottement S1, S2 coopèrent par friction pour coupler les arbres menant et mené A2.

Les moyens d'étanchéité sont constitués par les moyens de liaison formés par la portion radiale interne 52 du disque de friction 46 comportant la face proximale d'appui 48, soit le premier élément, qui coopère avec la paroi 56 de la deuxième coquille avant 14A comportant la face distale d'appui 48, soit l'élément adjacent, la portion 52 du disque de friction 46 étant fixée à la paroi 56 au moyen de rivets 54', de préférence de type extrudé, destinés à les lier en rotation.

En variante, la liaison en rotation entre le premier élément, formé par le disque de friction 46 portant la garniture de frottement 44, et l'élément adjacent formé par la deuxième coquille 14A est réalisée par engrènement ou par soudage.

Dans ce deuxième mode de réalisation, les moyens de progressivité déformables élastiquement comportent au moins un troisième cordon 59 qui, formant avantageusement un moyen supplémentaire de progressivité, est globalement coaxial aux premier et second cordons 58 et 60.

De préférence, le troisième cordon 59 est agencé radialement à l'intérieur du premier cordon 58 et à l'extérieur du second cordon 60 de sorte que le troisième cordon 59 est agencé radialement entre le premier cordon 58 et le second cordon 60.

Avantageusement, le troisième cordon 59 est réalisé sous la forme d'un cordon fermé, c'est-à-dire circonférentiellement continu, qui coopérant avec chacune des faces proximale et distale d'appui 48, 50 forme un moyen supplémentaire d'étanchéité par rapport aux rivets extrudés 54'.

Avantageusement, un tel troisième cordon 59 est donc susceptible de former les moyens d'étanchéité requis lorsque les moyens de liaison ne sont pas de nature à assurer cette fonction, typiquement lorsque la liaison en rotation entre le premier élément et l'élément adjacent est réalisée par engrènement.

Suivant une telle variante non représentée, les moyens d'étanchéité sont alors aussi susceptibles d'être constitués par un organe d'étanchéité distinct, par exemple sous la forme d'un joint interposé axialement entre les faces proximale et distale d'appui 48, 50 et agencé radialement entre les moyens de liaison non étanches et les moyens de progressivité formés par les cordons 58, 59 et 60, et cela afin de dissocier les fonctions de progressivité et d'étanchéité.

Le troisième cordon 59 délimite radialement un premier espace annulaire E1 avec le premier cordon 58 et un deuxième espace annulaire E2 avec le second cordon 60, lesdits espaces E1, E2 étant délimités axialement par les faces proximale 48 et distale 50 d'appui.

Les faces proximale 48 et distale 50 d'appui coopèrent respectivement avec au moins le troisième cordon 59 de progressivité, en particulier si le cordon 59 est aussi un moyen d'étanchéité.

De préférence, tous les cordons de progressivité 58, 59 et 60 sont solidaires de la face d'appui proximale 48 du premier élément et de la face distale 50 de l'élément adjacent.

Toutefois, les cordons de progressivité 58, 59, 60 ne sont pas aptes à transmettre un couple entre le premier élément et l'élément adjacent, la transmission du couple est assurée par les moyens de liaison en rotation (par rivetage, soudage ou engrènement) intervenant entre lesdits éléments.

Avantageusement, les moyens d'ouverture 62 destinés à permettre la variation de pression dans chacun des espaces annulaires E1, E2 sont constitués par des orifices radiaux de passage 62E et 62I réalisés sélectivement dans les cordons de progressivité 58 et 60 respectivement.

Les moyens d'ouverture 62E, 62I sont aptes à établir dans chacun des espaces annulaires E1, E2 une circulation d'huile propre à permettre un refroidissement, en particulier un refroidissement de la face proximale d'appui 48 du disque de friction 46 formant le premier élément et comportant la première surface de frottement S1.

Comme illustré à la figure 6, le troisième cordon 59 est continu tandis que les premier et second cordons 58, 60 sont, interrompus par les orifices de passage 62E, 62I, circonférentiellement discontinus et réalisés sous la forme de quatre portions d'arc de cercle, de manière analogue à ceux de la figure 2.

Les figures 7 et 8 représentent un quatrième exemple de réalisation des moyens de progressivité selon l'invention qui sera notamment décrit par comparaison aux exemples précédents.

Dans ce quatrième exemple de réalisation, on remarquera que l'amortisseur 20 de l'appareil 10, qui est analogue à celui de la figure 1, se trouve implanté sur un diamètre inférieur et en partie enveloppé par la portion intermédiaire du piston 36.

De manière analogue aux exemples de réalisation des figures 1 à 4, l'élément adjacent est constitué par le piston 36 de l'embrayage de verrouillage 12 dont la face radiale avant forme la face distale d'appui 50.

Le premier élément est formé par le disque de friction 46 portant la garniture de frottement 44 qui comporte la première surface de frottement S1 destinée à coopérer avec la deuxième surface de frottement S2 portée par la face radiale arrière 56 de la deuxième coquille avant 14A de carter.

De préférence, les moyens de progressivité déformables élastiquement comportent un troisième cordon 59 formant un moyen supplémentaire de progressivité, ledit cordon 59 étant globalement coaxial à des premier et second cordons 58, 60.

Le troisième cordon 59 délimite radialement un premier espace annulaire E1 avec le premier cordon 58 et un deuxième espace annulaire E2 avec le second cordon 60, lesdits espaces annulaires E1, E2 étant encore délimités axialement par les faces d'appui proximale et distale 48, 50.

La liaison en rotation entre le premier élément, formé par le disque de friction 46 portant la garniture de frottement 44, et l'élément adjacent formé par le piston 36, est réalisée par engrènement, c'est à dire coopération de formes de type dentures entre des éléments mâle et femelle complémentaires.

Avantageusement, l'embrayage de verrouillage 12 comporte des moyens d'étanchéité constitués par au moins l'un des cordons, tel que le troisième cordon 59 qui, agencé radialement entre les premier et second cordons 58, 60, est circonférentiellement continu ou fermé.

Les moyens d'ouverture 62 destinés à permettre la variation de pression dans chacun des espaces annulaires E1, E2 sont constitués par une paire d'orifices de passage 62E ou 62I réalisés respectivement dans le premier cordon 58 et dans le second cordon 60, de préférence diamétralement opposés pour chaque paire et décalés angulairement à 90° d'une paire à l'autre.

Avantageusement, la circulation d'huile établie dans chacun des espaces annulaires E1 et E2 permet d'obtenir un refroidissement optimal.

De préférence, au moins un 60 des cordons 58, 59, 60 présente une raideur élastique différente de la raideur élastique de l'un au moins des autres cordons, notamment le premier cordon 58 et/ou le troisième cordon 59.

Pour réaliser la liaison en rotation par engrènement, le disque de friction 46 comporte, à l'instar de la partie interne 52 précédemment, une partie externe 66 qui s'étend radialement au-delà de la garniture de frottement 44 et dans laquelle sont ménagés des logements 68 destinés à coopérer avec des moyens de liaison complémentaires pour réaliser un engrènement par coopération de formes.

De préférence, les logements 68 sont répartis circonférentiellement de manière régulière de sorte que la partie 66 du disque de friction 46 présente globalement un profil en forme de créneau.

Le piston 36 comporte à sa périphérie radiale externe lesdits moyens de liaison complémentaires destinés à coopérer avec les moyens de liaison formés par les logements 68.

Avantageusement, les moyens complémentaires sont constitués par des pattes 70 qui, s'étendant axialement vers l'avant, sont aptes à lier solidairement en rotation, sans jeu circonférentiel, le disque de friction 46 (ou premier élément) au piston 36 (ou élément adjacent) comportant la face distale d'appui 50.

Les figures 9 et 10 représentent un cinquième exemple de réalisation de l'invention qui sera décrit ci-après par comparaison, notamment avec le quatrième exemple de réalisation illustré aux figures 7 et 8.

Le premier élément est formé par le disque de friction 46 portant la garniture de frottement 44 qui comporte la première surface de frottement S1 destinée à coopérer avec la deuxième surface de frottement S2 formée par la face radiale arrière 56 de la deuxième coquille avant 14A de carter, tandis que l'élément adjacent est constitué par le piston 36 de l'embrayage de verrouillage 12 dont la face radiale avant forme la face distale d'appui 50.

De préférence, les moyens de progressivité déformables élastiquement comportent trois cordons concentriques, respectivement des premier et second cordons 58, 60 agencés radialement à l'extérieur et à l'intérieur d'un troisième cordon 59.

Le troisième cordon 59 délimite radialement un premier espace annulaire E1 avec le premier cordon 58 et un deuxième espace annulaire E2 avec le second cordon 60, lesdits espaces annulaires E1, E2 étant encore délimités axialement par les faces d'appui proximale et distale 48, 50.

Les premier et second cordons 58 et 60 sont fermés, c'est-à-dire circonférentiellement continu, et sont solidaires des faces proximale et distale d'appui 48 et 50 de sorte qu'ils constituent respectivement des moyens d'étanchéité aptes à permettre d'établir une pression de commande entre les chambres 40 et 42 pour réaliser le pontage en déplaçant axialement vers l'avant le piston 36 jusqu'à sa position de fonctionnement dans laquelle les première et deuxième surfaces de frottement coopèrent.

Avantageusement, les moyens d'ouverture associés aux cordons de progressivité 58, 59 et 60 sont respectivement constitués, d'une part, par des orifices de passage 62 réalisés dans le troisième cordon 59 et, d'autre part, par des trous 72 traversant axialement le piston 36 et débouchant dans les espaces annulaires E1, E2.

Le premier espace annulaire E1 et le deuxième espace annulaire E2 sont mis en communication l'un avec l'autre par l'intermédiaire des orifices radiaux de passage 62 du troisième cordon 59 et avec l'extérieur, c'est-à-dire l'huile comprise dans le volume interne 16, par l'intermédiaire des trous axiaux 72.

De préférence, le troisième cordon 59 comporte trois orifices de passage 62 répartis circonférentiellement de manière régulière à 120° et le piston 36 comporte également des trous axiaux 72 qui sont au nombre de trois.

Bien entendu, le nombre d'orifices 62 et/ou de trous 72 formant les moyens d'ouverture n'est donné qu'à titre d'exemple non limitatif et est susceptible de varier en fonction des applications.

Avantageusement, les trous axiaux 72 sont ici agencés radialement dans le piston 36 de manière à déboucher axialement au niveau des orifices radiaux de passage 62 du troisième cordon 59 et par conséquent dans l'un et l'autre des espaces annulaires E1 et E2.

Bien entendu, lorsqu'au moins une partie des moyens d'ouverture 62 sont formés par de tels trous axiaux 72, il importe que des moyens d'étanchéité 64 soient agencés radialement à l'intérieur de ces derniers de manière que les chambres 40 et 42 ne soient pas en communication l'une avec l'autre et que le piston 36 puisse être mu vers sa position de fonctionnement lors du pontage.

Les figures 11 et 12 représentent un sixième exemple de réalisation de l'invention qui sera décrit ci-après par comparaison, notamment avec le cinquième exemple de réalisation.

Les moyens de progressivité sont constitués par des premier, second et troisième cordons 58, 59 et 60 qui sont tous fermés ou circonférentiellement continus et solidaires des faces proximale et distale d'appui 48 et 50 de manière à former des moyens d'étanchéité.

Le premier espace annulaire E1 délimité radialement par le troisième cordon 59 avec le premier cordon 58 et le deuxième espace annulaire E2 délimité radialement par le troisième cordon 59 avec le second cordon 60, lesdits espaces annulaires E1, E2 étant délimités axialement par les faces d'appui proximale et distale 48, 50, sont donc respectivement isolés l'un par rapport à l'autre.

Pour mettre en communication chacun des espaces annulaires E1 et E2 avec l'extérieur et y permettre une variation de pression lors du pontage, des moyens d'ouverture sont prévus et réalisés sous la forme de trous axiaux traversant le piston 36 associés à chaque espace annulaire E1, E2.

Avantageusement, les moyens d'ouverture comportent respectivement une première série de trous axiaux 72E qui débouchent, entre les cordons 58 et 59, dans l'espace annulaire E1 et une deuxième série de trous axiaux 721 qui débouchent, entre les cordons 59 et 60.

De préférence, la première série de trous 72E formant les moyens d'ouverture du premier espace annulaire E1 et la deuxième série de trou 721 formant les moyens d'ouverture du deuxième espace annulaire E2 sont décalés angulairement les uns par rapport aux autres.

Grâce aux moyens d'ouverture, d'une part on préserve l'intégrité des cordons 58, 59 et 60 lorsque, pour le pontage, une pression pouvant atteindre par exemple 5 bars, est appliquée au piston 36 et, d'autre part, on établit une circulation d'huile dans chacun des espaces annulaires E1 et E2 qui provoque un refroidissement de la face proximale d'appui 48 adjacente du disque de friction 46 et donc de la garniture de frottement 44 portée par la face opposée.

Avantageusement, au moins un 58 des cordons 58, 59, 60 présente une raideur élastique différente de la raideur élastique de l'un au moins des autres cordons, notamment du deuxième cordon 58 et/ou du troisième cordon 59.

La figure 13 représente un septième exemple de réalisation dans lequel les moyens de progressivité sont constitués, comme pour le premier exemple de réalisation, par deux cordons concentriques respectivement un premier cordon 58 et un second cordon 60.

Avantageusement, l'embrayage de verrouillage 12 comporte des moyens de butée 74 destinés à limiter axialement la déformation élastique des cordons 58, 60 formant les moyens de progressivité selon l'invention.

De préférence, les moyens de butée 74 sont rapportés solidairement sur la face proximale d'appui 48 du disque de friction 46 et sont agencés radialement dans l'espace annulaire E délimité par les cordons 58 et 60.

Les moyens de butée 74 sont par exemple constitués par des plots en matière élastomère d'une raideur appropriée pour limiter la déformation élastique des cordons, les plots 74 sont par exemple fixés par collage ou tout autre moyen approprié sur la face 48.

Avantageusement, la rigidité des moyens de butée 74 est déterminée pour garantir un écartement axial minimal entre la face proximale d'appui 48 et la face distale d'appui 50 du piston 36 de manière à limiter la compression des cordons 58, 60 en dessous d'une valeur propre à les préserver tout en réalisant une progressivité suffisante.

Avantageusement, le premier cordon 58 présente une forme circonférentiellement discontinue déterminant des moyens d'ouverture 62, tels qu'un orifice radial de passage, entre deux formes consécutives et le second cordon 60 est fermé de manière à constituer les moyens d'étanchéité permettant d'établir la pression de commande pour déplacer axialement le piston 36 de l'embrayage de verrouillage 12.

Avantageusement, les cordons 58, 60 présentent, en coupe axiale, une section sensiblement constante de manière que les faces proximale 48 et distale 50 d'appui s'étendent radialement globalement parallèlement entre elles avec un écartement axial "e", compris entre le disque de friction 46 et le piston 36, sensiblement constant.

La figure 14 représente un huitième exemple de réalisation dans lequel, par comparaison à la figure 13, les moyens de butée axiale 74 sont formés par un embouti qui, réalisé dans le piston 36, s'étend axialement dans l'espace annulaire E délimité par le premier cordon 58 et le second cordon 60.

En variante, !es moyens de butée axiale 74 sont formés par un embouti réalisé dans le disque de friction 46 et qui, de préférence, s'étend axialement dans l'espace annulaire E délimité par le premier cordon 58 et le second cordon 60.

En variante, les moyens de butée axiale 74 sont agencés radialement à l'extérieur et à l'intérieur du premier cordon 58 et du second cordon 60 de manière que l'espace annulaire E soit libre de tout obstacle pour la circulation de l'huile participant au refroidissement des faces 48 et 50 adjacentes.

Les figures 15A et 15B représentent un neuvième exemple de réalisation des moyens de progressivité illustrés respectivement en positions de repos (dépontage) et de fonctionnement (pontage) de l'embrayage de verrouillage 12.

De préférence, les moyens d'étanchéité 64 sont constitués par le second cordon 60 circonférentiellement continu qui, solidaire de la face proximale d'appui 48 et la face distale d'appui 50, est agencé radialement à l'intérieur des cordons 58 et 59. Comme le second cordon 60 qui assure une double fonction de progressivité d'une part et d'étanchéité, d'autre part, les autres cordons 58 et 59 sont solidaires de chacune des faces proximale 48 et distale 50 d'appui.

Les moyens d'ouverture 62 destinés à permettre la variation de pression dans chacun des espaces annulaires E1, E2 sont constitués par au moins un orifice radial de passage 62 réalisé sélectivement dans chacun des cordons 58 et 59.

Avantageusement, les cordons 58, 59 et 60 présentent, en coupe axiale, une section croissante selon la direction radiale et suivant une orientation allant de l'intérieur vers l'extérieur de manière que l'écartement axial "e", compris entre le premier élément formé par le disque de friction 46 comportant la face proximale d'appui 48 et l'élément adjacent formé par le piston 36 comportant la face distale d'appui 50, augmentant radialement, la garniture de frottement 44 portée par le disque de friction 46 soit inclinée.

La première surface de frottement S1 de la garniture de frottement 44 comme la face proximale d'appui 48 portée par le disque de friction 46 sont respectivement inclinée d'un angle (α) déterminé par rapport à un plan radial orthogonal à l'axe X-X, la face distale d'appui 50 du piston 36 s'étendant radialement orthogonalement à l'axe X-X.

Avantageusement, la garniture de frottement 44 est inclinée de manière que, lors du pontage, la partie radialement interne de la garniture 44 formant la première surface de frottement S1 entre la première en contact avec la deuxième surface de frottement S2 formée par la paroi 56 de la deuxième coquille avant 14A de carter, c'est-à-dire avant la partie radialement externe qui, du fait de l'inclinaison, s'étend axialement en arrière.

Les figures 16 et 17 représentent un dixième exemple de réalisation dans lequel les cordons 58, 59 et 60 sont interposés axialement entre la face distale d'appui 50 du piston 36 formant l'élément adjacent et la face proximale d'appui 48 du premier élément qui est formé directement par une garniture de frottement 44 munie à sa périphérie radiale interne de moyens de liaison en rotation, tels que des pattes 71.

Les pattes 71 sont avantageusement réalisées en une seule pièce, venue de matière, avec la garniture de frottement 44 et le disque de friction 46 supprimé.

Avantageusement, les pattes 71 s'étendent circonférentiellement de manière régulière et sont aptes à coopérer avec les encoches 69 que comporte la face radiale avant du piston 36 pour réaliser directement (sans jeu) la liaison en rotation entre la garniture de frottement 44 et le piston 36.

En variante, le premier élément est constitué comme précédemment par un disque de friction 46 portant la garniture de frottement 44 et comporte des pattes 71 réalisées en une seule pièce, venue de matière, avec sa partie radialement interne 52.

De préférence, les moyens d'ouverture 62 des-espaces annulaires E1 et E2 sont constitués par des orifices radiaux de passage 62 dans les premier et troisième cordons 58, 59 et les moyens d'étanchéité 64 sont formés par le second cordon 60.

Avantageusement, le diamètre de la ou des garnitures de frottement 44 est optimal dès lors que les moyens de liaison en rotation par engrènement sont agencés radialement à l'intérieur de la garniture de frottement 44.

En effet, la périphérie radialement externe du disque de friction 46 portant la garniture de frottement 44 est alors susceptible de venir au plus près de la portion d'orientation axiale de la deuxième coquille avant 14A de carter.

La figure 18 illustre une variante de réalisation dans laquelle les moyens de liaison en rotation entre le piston 36 et le disque de friction 46 sont réalisés, non par rivetage ou engrènement, mais par soudage.

Avantageusement, le soudage est réalisée sous la forme d'un cordon de soudure 76 circonférentiellement continu qui lie en rotation l'extrémité de la partie radiale interne 52 du disque de friction 46 à la face distale d'appui 50 du piston 36.

Avantageusement, les moyens d'étanchéité 64 sont alors constitués par le cordon de soudure 76 et aucun des cordons 58, 59 et 60 n'assurent une double fonction de moyen de progressivité et d'étanchéité comme par exemple le second cordon 60 pour le dixième exemple de réalisation illustré aux figures 16 et 17 précédentes.

Ainsi, les moyens d'étanchéité 64 sont ici constitués par les moyens de liaison 76 destinés à lier en rotation le premier élément 46 comportant la face proximale d'appui 48 et l'élément adjacent 36 comportant la face distale d'appui 50.

On décrira ci-après une deuxième application de l'invention à un embrayage de verrouillage 12 de type "bifaces" par comparaison avec les modes et exemples de réalisation décrits précédemment pour la première application et représentés aux figures 1 à 18.

En conséquence, les éléments identiques, similaires ou analogues y sont désignés par les mêmes chiffres de référence.

Un tel embrayage de verrouillage 12 bifaces est représenté à la figure 19, les figures 19 et 20 illustrant un troisième mode de réalisation des moyens de progressivité.

Le moyeu de turbine 28 présente globalement, en coupe axiale, une forme similaire à celle de la figure 1, c'est-à-dire en "L", mais comporte respectivement une partie d'orientation radiale et une partie d'orientation axiale qui s'étend vers l'arrière.

L'extrémité radialement intérieure de la coquille de la roue de turbine 24 est ici fixée par des rivets 55, en variante par soudage, sur l'extrémité de la partie d'orientation radiale du moyeu 28.

De préférence, l'extrémité de la partie d'orientation radiale du moyeu 28 comporte au moins lamage de manière à intégrer les rivets 55 dans l'épaisseur axiale et à assurer un positionnement radial de l'extrémité de la coquille de la roue de turbine 24.

Comme précédemment, l'amortisseur 20 comporte principalement un élément d'entrée 30 et un élément de sortie 32 entre lesquels sont interposés des organes élastiques 34 à action circonférentielle.

L'élément de sortie 32 de l'amortisseur 20 est formé par un voile d'orientation radiale qui est lié en rotation, à sa périphérie interne, à la coquille de la roue de turbine 24 et au moyeu de turbine 28 par l'intermédiaire des rivets 55.

L'élément de sortie 32 de l'amortisseur 20 comporte à sa périphérie radiale externe des fenêtres dans lesquelles sont montés les organes élastiques 34 à action circonférentielle.

L'élément d'entrée 30 de l'amortisseur 20 est constitué par deux rondelles de guidage, respectivement une rondelle de guidage avant 30A et une rondelle de guidage arrière 30B qui, solidaires l'une de l'autre, sont liées en rotation sans jeu circonférentiel.

Selon l'exemple illustré à la figure 19, la liaison des rondelles de guidage 30A et 30B est notamment réalisée par sertissage de l'extrémité libre de la partie externe de la rondelle de guidage avant 30A qui s'étend axialement vers l'arrière, avec la partie externe de la rondelle de guidage arrière 30B qui s'étend radialement en vis-à-vis.

Chacune des rondelles de guidage 30A et 30B comporte des emboutis de manière à former des zones d'appui pour les organes élastiques à action circonférentielle 34.

La rondelle de guidage avant 30A comporte des moyens de liaison, tels que des pattes d'entraînement 78, destinés à lier en rotation l'entrée de l'amortisseur 20 avec l'embrayage de verrouillage 12.

L'embrayage de verrouillage 12 comporte un piston 36 qui est monté mobile axialement et qui est destiné à lier, de manière débrayable, la deuxième coquille avant 14A du carter 14 à l'arbre mené A2.

Le piston 36 est monté mobile axialement par rapport à la partie d'orientation axiale du centreur 17 solidaire de la coquille avant 14A du carter, la partie du centreur 17 s'étendant axialement vers l'arrière en direction du moyeu de turbine 28.

Avantageusement, des moyens de butée 80 sont susceptibles d'être interposés axialement entre l'extrémité axiale arrière du centreur 17 et le moyeu de turbine 28.

Le piston 36 comporte à sa périphérie interne une première portion en forme de L, semblable ici à celle du moyeu 28, dont la partie d'orientation axiale constitue une virole 37 s'étendant axialement vers l'arrière et coopère avec un moyen d'étanchéité 38, tel qu'un segment ou un joint.

Le moyen d'étanchéité 38 est interposé entre la surface interne de coulissement du piston 36 formée par la virole 37 et la surface externe en vis-à-vis du centreur 17, de manière à assurer l'étanchéité entre une première chambre, dite chambre de commande 40 et une seconde chambre, dite chambre de turbine 42.

Le moyen d'étanchéité 38 est logé dans une gorge annulaire réalisée dans le centreur 17, le centreur 17 comportant à l'arrière un chanfrein destiné à en faciliter le montage par emboîtement et comportant à l'avant des perçages 79 destinés à mettre en communication la chambre de commande 42 avec un alésage central de l'arbre mené A2 à travers lequel circule l'huile.

Tel que représenté sur la figure 19, le piston 36 comporte successivement suivant la direction radiale et de l'intérieur vers l'extérieur, la première portion interne en L qui vient d'être décrite, une seconde portion intermédiaire globalement rectiligne qui s'étend parallèlement à la portion de la deuxième coquille avant 14A du carter située en vis-à-vis et se termine par une troisième portion externe comportant une quatrième surface de frottement S4.

Le piston 36 est lié en rotation à la paroi 56 formée par la face radiale arrière de la première coquille avant 14A du carter par l'intermédiaire de moyens de liaison 82.

De préférence, les moyens de liaison 82 sont formés par des groupes de languettes, réparties circonférentiellement de manière régulière, chaque groupe comportant une ou plusieurs languettes dont une extrémité est fixée au piston 36 et dont l'autre extrémité est fixée à la première coquille avant 14A du carter.

Avantageusement, les moyens de fixation des languettes 82 sont constitués par des rivets, notamment des rivets extrudés 84 pour la liaison en rotation avec la paroi 56 de la première coquille avant 14A du carter.

L'embrayage de verrouillage 12 de type bifaces comporte une première garniture de frottement avant 44A et une deuxième garniture de frottement arrière 44B qui sont respectivement liées en rotation sans jeu avec un disque de friction avant 46A et un disque de friction arrière 46B.

Avantageusement, les garnitures de frottement 44A, 44B sont solidaires par collage des disques de friction 46A et 46B associés, en variante par rivetage.

Selon l'invention, l'embrayage de verrouillage 12 comporte -des moyens de progressivité qui, déformables élastiquement selon au moins la direction axiale, sont constitués par au moins un premier cordon 58 et un second cordon 60, globalement coaxial au premier cordon 58.

Avantageusement, les moyens de progressivité comportent au moins un troisième cordon 59 formant un moyen supplémentaire de progressivité, globalement coaxial aux premier et second cordons 58, 60.

Les cordons 58, 59, 60 formant les moyens de progressivité sont respectivement interposés axialement entre au moins une face proximale d'appui 48 et une face distale d'appui 50.

Le troisième cordon 59 délimite radialement un premier espace annulaire E1 avec le premier cordon 58 et un deuxième espace annulaire E2 avec le second cordon 60, lesdits espaces annulaires E1 et E2 étant délimités axialement par les faces proximale 48 et distale 50 d'appui.

La face proximale d'appui 48 est portée par un premier élément formé par le disque de friction avant 46A, plus précisément par la face radiale arrière de ce disque 46A, la face radiale avant axialement opposée portant la première garniture de frottement 44A comportant la première surface de frottement S1.

La face distale d'appui 50 est portée par un élément adjacent formé par l'autre disque de friction arrière 46B, plus précisément par la face radiale avant de ce disque 46B, la face radiale arrière axialement opposée portant la deuxième garniture de frottement 44B comportant une troisième surface de frottement arrière S3.

En variante non représentée, les disques de friction 46A et 46B sont supprimés et le premier élément comportant la face proximale d'appui 48 et l'élément adjacent comportant la face distale d'appui 50 sont constitués directement par l'une et l'autre des garnitures de frottement 44A et 44B, les faces d'appui 48, 50 étant formées par les faces des garnitures axialement opposées aux faces de frottement S1, S3.

La première surface de frottement S1 que comporte la première garniture de frottement avant 44A portée par le disque de friction avant 46A formant le premier élément est destinée à coopérer avec une deuxième surface de frottement S2 qui, axialement en vis-à-vis, est portée par la face radiale arrière ou paroi 56 de la deuxième coquille avant 14A de carter formant un deuxième élément.

La troisième surface de frottement S3 que comporte la deuxième garniture de frottement arrière 44B portée par le disque de friction arrière 46B formant l'élément adjacent est destinée à coopérer avec la quatrième surface de frottement S4 associée qui, axialement en vis-à-vis, est formée par la portion radialement externe de la face radiale avant du piston 36.

Avantageusement, lesdits premier élément et élément adjacent, formés ici respectivement par un disque de friction 46A, 46B portant une garniture de frottement 44A, 44B, sont munis de moyens de liaison aptes à lier solidairement en rotation lesdits éléments, directement ou avec interposition d'un amortisseur 20, à une pièce liée en rotation à la roue de turbine 24.

L'appareil d'accouplement hydrocinétique 10 comportant un amortisseur 20 et ladite pièce est constituée par l'élément d'entrée de l'amortisseur 20, plus précisément ici par la rondelle de guidage avant 30A comportant les pattes d'entraînement 78.

Les disques de friction 46A, 46B comportent chacun à leur périphérie radiale externe des moyens de liaison 86, tels que des encoches représentées sur la figure 20, qui sont complémentaires des pattes d'entraînement 78.

Les encoches 86 sont réalisées dans une portion externe du disque 46A, 46B qui s'étendant radialement au-delà de la portion interne portant la garniture de frottement 44A, 44B associée, lesdites portions externe et interne de chaque disque se raccordant entre elles à la faveur d'un pli oblique de manière à les décaler axialement.

En effet, les portions comportant les encoches 86 sont accolées et sensiblement coplanaires tandis que les portions internes comportant les faces d'appui 48 et 50 sont distantes d'un écartement axial donné de manière à permettre l'implantation des moyens de progressivité 58, 59 et 60.

Le disque de friction avant 46A formant le premier élément est donc lié en rotation au disque de friction arrière 46B formant l'élément adjacent 46B par l'intermédiaire des moyens de liaison par engrènement constitués par leurs encoches 86 respectives et les pattes d'entraînement 78 de la rondelle de guidage avant 30A.

Avantageusement, l'embrayage de verrouillage 12 comporte encore des moyens d'ouverture 62 associés aux moyens de progressivité et destinés à permettre, lors du pontage par le piston 36, une variation de pression dans les espaces annulaires E1 et E2 que délimitent d'une part axialement les faces proximale 48 et distale 50 d'appui et, d'autre part, radialement lesdits cordons 58, 59 et 60.

Avantageusement, l'embrayage de verrouillage 12 comporte des moyens d'étanchéité 64 aptes à permettre d'établir une pression de commande pour déplacer axialement le piston 36 vers sa position de fonctionnement, dite de pontage, dans laquelle les surfaces de frottement S1 et S2 d'une part et les surfaces de frottement S3 et S4, d'autre part, coopèrent respectivement ensemble pour coupler les arbres menant et mené A2.

Avantageusement, les moyens d'étanchéité 64 sont constitués au moins par l'un des cordons 58, 59, 60, de préférence ici par le troisième cordon 59 agencé radialement entre les premier et second cordons 58, 60. Le troisième cordon 59 est circonférentiellement continu, c'est-à-dire fermé, et coopère avec chacune des faces proximale et distale d'appui 48, 50 pour assurer la fonction d'étanchéité.

Selon un exemple de réalisation possible représenté sur la figure 20, le premier cordon 58 est réalisé sous la forme de quatre portions d'arc de cercle réparties circonférentiellement de manière régulière et interrompues par quatre orifices radiaux de passage 62E.

Le second cordon 60 est réalisé sous une forme similaire en arc de cercle, le second cordon 60 comportant trois portions d'arc de cercle interrompues par trois orifices radiaux de passage 621.

En variante non représentée, les moyens d'ouverture 62 sont constitués par au moins un trou traversant axialement l'élément adjacent et/ou par au moins un trou traversant axialement le premier élément, c'est-à-dire traversant axialement la garniture de frottement 44B et le disque de friction 46B et/ou traversant la garniture de frottement 44A et le disque de friction 46A de manière à établir une communication entre chacun des espaces annulaires associés E1 et E2 dans lequel ledit au moins un trou débouche et le volume intérieur 16 du carter 14 rempli d'huile.

Avantageusement, les moyens de progressivité 58, 59, 60 sont réalisés en un matériau élastomère, telle qu'une silicone thixotrope, présentant des caractéristiques stables lorsqu'il est immergé dans l'huile contenue dans le carter 14 de l'appareil 10.

Avantageusement, les moyens d'ouverture 62E, 621 sont aptes à établir dans les espaces annulaires associés E1 et E2, une circulation d'huile propre à permettre un refroidissement efficace tant de la face proximale d'appui 48 du disque de friction 46A portant la garniture de frottement 44A comportant la première surface de frottement S1, que de la face distale d'appui 50 du disque de friction 46B pourtant l'autre garniture de frottement 44B comportant la troisième surface de frottement S3.

Avantageusement, les cordons 58, 59 et 60 présentent, en coupe axiale, une section sensiblement constante de manière que les faces proximale et distale d'appui 48, 50 s'étendent radialement globalement parallèlement entre elles avec un écartement axial "e" sensiblement constant.

En variante, les cordons 58, 59, 60 présentent, en coupe axiale, selon la direction radiale une section croissante telle que l'écartement axial "e" augmente ou diminue suivant une orientation allant de l'intérieur vers l'extérieur de manière que les garnitures de frottement 44A et 44B soient inclinées par rapport à un plan radial de référence orthogonal à l'axe principal X-X.

De préférence, les cordons 58, 59 et 60 présentent sensiblement tous une raideur élastique identique.

En variante, au moins un des cordons 58, 59, 60 présente une raideur élastique différente de la raideur élastique de l'un au moins des autres cordons 58, 59, 60.

Avantageusement, l'embrayage de verrouillage 12 de l'appareil comporte des moyens de butée axiale aptes à limiter la déformation élastique des moyens de progressivité, tels que les moyens de butée 74 représentés aux figures 13 et 14 et décrits précédemment.

On a représenté aux figures 21 et suivantes un appareil d'accouplement hydrocinétique 10 équipé selon une troisième application d'un embrayage de verrouillage 12 de type multi-disques.

L'appareil d'accouplement hydrocinétique 10 comporte un carter 14 étanche qui, rempli d'un fluide tel que de l'huile, est formé de deux éléments globalement en forme de coquille, respectivement une première coquille arrière 14B et une deuxième coquille avant 14A.

Les coquilles du carter 14 délimitent un volume interne 16 de l'appareil 10 à l'intérieur duquel sont principalement agencés un convertisseur de couple 18, l'embrayage de verrouillage 12 et un dispositif d'amortissement ou amortisseur 20.

Le convertisseur de couple 18 est similaire à celui décrit pour les première et deuxième applications et comporte principalement une roue d'impulseur arrière 22, une roue de turbine avant 24 et une roue de réaction centrale 26.

La roue d'impulseur 22 comporte des aubes 22a qui sont portées par la première coquille arrière 14B, laquelle est solidaire en rotation de l'autre coquille avant 14A du carter 14 et la roue de turbine 24 comporte aussi des aubes 24a qui font face axialement aux aubes 22a de la roue d'impulseur 22.

La coquille arrière 14B est apte à être liée en rotation à un arbre menant et la roue de turbine 24 apte à être liée en rotation à un arbre mené A2, coaxial à l'axe principal X-X de l'appareil 10.

Dans le cas d'une application à un véhicule automobile, l'arbre menant est constitué par le vilebrequin du moteur à combustion interne du véhicule, tandis que l'arbre mené A2 est constitué par l'arbre d'entrée de la transmission du véhicule, conventionnellement relié à des moyens de changement de rapport de vitesses.

Par comparaison avec les applications précédentes, les moyens de liaison 15 et 17 associés à la deuxième coquille avant 14A pour sa liaison en rotation à l'arbre menant n'ont pas été représentés, l'arbre mené A2 est entouré par autre arbre commandé qui, concentrique, est lié en rotation, par exemple par engrènement, avec la roue de réaction 26.

L'arbre mené A2 est lié à la roue de turbine 24 par l'intermédiaire d'au moins une pièce formée par un moyeu de turbine 28 auquel l'extrémité libre de la coquille de la roue de turbine 24 est liée par soudage par friction, en variante par rivetage.

L'appareil 10 comportant avantageusement un amortisseur 20, le moyeu de turbine 28 est lié à l'arbre mené A2 par l'intermédiaire de l'amortisseur 20 qui comporte un élément d'entrée 30 et un élément de sortie 32.

L'élément d'entrée 30 de l'amortisseur 20 est constitué par des rondelles de guidage, respectivement une rondelle de guidage avant 30A et une rondelle de guidage arrière 30B qui est liée en rotation sans jeu au moyeu de turbine 28 et à la roue de turbine 24, de préférence par engrènement, en variante par soudage ou rivetage.

Les rondelles de guidage 30A, 30B sont solidaires à rotation l'une de l'autre par leurs bords périphériques extérieurs, par exemple au moyen de rivets 88.

L'élément de sortie 32 de l'amortisseur 20 est constitué par au moins un voile 32. De préférence, le voile 32 est lié en rotation sans jeu à un moyeu de sortie 90, par exemple par engrènement, le moyeu de sortie 90 étant lié en rotation par engrènement à l'arbre mené A2.

Bien entendu, selon une variante de réalisation (non représentée), le voile 32, formant l'élément de sortie de l'amortisseur 20, peut être réalisé en une seule pièce avec le moyeu de sortie 90.

Le couple transmis par la roue de turbine 24 est directement transmis aux rondelles de guidage 30A, 30B formant l'élément d'entrée de l'amortisseur 20, puis au voile 32 formant l'élément de sortie de l'amortisseur 20, par l'intermédiaire d'organes élastiques 34 à action circonférentielle, et cela après débattement angulaire des rondelles de guidage 30A, 30B par rapport au voile 32.

De préférence, l'amortisseur 20 comporte des moyens de butée (non représentés) aptes à limiter angulairement le débattement circonférentiel entre les rondelles de guidage 30A, 30B et le voile 32, le voile 32 étant agencé axialement entre les rondelles de guidage 30A, 30B.

Les organes élastiques 34 à action circonférentielle sont interposés circonférentiellement entre les rondelles de guidage 30A, 30B et le voile 32, le voile 32 comportant des fenêtres 92 dans lesquelles sont reçus les organes élastiques 34.

Les rondelles de guidage 30A, 30B comportent aussi chacune une partie centrale munie de fenêtres 94 agencées axialement au droit des fenêtres 92 du voile 32.

Les organes élastiques 34 sont en appui respectivement sur les bords radiaux des fenêtres 94 des rondelles de guidage 30A, 30B et sur les bords radiaux des fenêtres 92 du voile 32. Les organes élastiques 34 sont maintenus axialement par les bords d'orientation circonférentielle des fenêtres 94 des rondelles de guidage 30A, 30B.

Selon des variantes non représentées, l'amortisseur 20 comporte des organes élastiques 34 à action circonférentielle qui sont reliés par l'intermédiaire d'une rondelle; dite de phasage (non représentée) et l'amortisseur 20 comporte une rondelle de frottement, encore dite d'hystérésis.

L'appareil d'accouplement hydrocinétique 10 comporte, à l'avant, une chambre de commande 40, qui est délimitée axialement par la paroi 56 de la deuxième coquille avant 14A du carter 14 et par un piston 36.

Le piston 36 est mobile axialement de manière à pouvoir venir serrer axialement, sous l'action de la pression de l'huile dans la chambre 40, les moyens de l'embrayage de verrouillage 12 multi-disques.

Un tel embrayage 12 comporte une pluralité de flasques 96 et de disques de friction 46, interposés axialement entre deux flasques 96 successifs, chaque disque de friction 46 étant avantageusement pourvu sur ses faces avant et arrière de garnitures de friction 44.

Les flasques 96 comportent, à leur périphérie radiale extérieure, des moyens d'engrènement 98, tels qu'une denture, aptes à lier en rotation par coopération de formes les flasques 96 à une première pièce de liaison 100.

Les disques 46 comportent, de manière analogue aux flasques 96, des moyens d'engrènement 102, tels qu'une denture, qui sont agencés à leur périphérie radiale intérieure et assurent la liaison en rotation avec une deuxième pièce de liaison 104.

De préférence, l'embrayage de verrouillage 12 comporte quatre flasques 96 et deux disques de friction 46 portant chacun deux garnitures de frottement 44.

Chaque disque de friction 46 est interposé axialement entre deux flasques 96 de manière que les première et troisième surfaces de frottement formées par chaque garniture de frottement 44 coopèrent avec des deuxième et quatrième surfaces de frottement S1, S4 situées axialement en vis-à-vis sur chacun des flasques 96.

La deuxième pièce de liaison 104 est liée en rotation avec l'entrée l'amortisseur 20, par l'intermédiaire de la rondelle de guidage avant 30A.

La deuxième pièce de liaison 104 présente globalement une forme en « L » comportant respectivement une branche axiale dont la face extérieure coopère par engrènement avec la denture 102 des disques de friction 46 et une branche radiale qui, s'étendant à partir de l'extrémité axiale arrière de la branche axiale, est fixée sur la face avant de la rondelle de guidage avant 30A par l'intermédiaire de rivets 106.

En variante, la deuxième pièce de liaison 104 peut être fixée sur la rondelle de guidage avant 30A par d'autres moyens, notamment par soudage.

Le piston 36 comporte, à sa périphérie radiale extérieure, une gorge annulaire 108 dans laquelle sont montés des premiers moyens 110 d'étanchéité dynamique, tels qu'un segment, qui coopèrent avec une surface annulaire en vis-à-vis portée par la première pièce de liaison 100 qui est solidaire de la deuxième coquille avant 14A.

Le piston 36 comporte, à sa périphérie radiale intérieure, une surface annulaire propre à coopérer avec des seconds moyens 38 d'étanchéité dynamique, tels qu'un segment, qui sont montés dans une gorge annulaire 112 d'un moyeu ou centreur 114 qui entoure le piston 36 et avec lequel il est lié en rotation, par exemple par engrènement.

Les moyens d'étanchéité 38, 110 délimitent ainsi la chambre de commande 40 indépendante qui est alimentée en huile par l'arbre mené A2 formé par un arbre creux, pour ce faire des passages radiaux 116 adaptés sont prévus dans l'arbre mené A2 et dans le moyeu 114.

L'appareil d'accouplement hydrocinétique 10 est du type "trois voies", c'est à dire qu'il comprend une première voie V1 d'alimentation du circuit hydraulique du convertisseur 18 et une seconde voie V2 de sortie, ainsi qu'une troisième voie d'alimentation V3 de la chambre de commande 40 pour déplacer axialement le piston 36.

La chambre de commande 40 est dite indépendante en raison du fait que la troisième voie V3 est indépendante des première V1 et seconde V2 voies du convertisseur 18.

Dans un tel appareil 10, la chambre de commande 40 est en permanence isolée du volume interne 16 du carter 14, indépendamment de l'état de l'embrayage de verrouillage 12, c'est-à-dire que le piston 36 soit en position de repos illustrée à la figure 21 ou en position de fonctionnement pour réaliser le pontage.

Le fonctionnement général de l'appareil d'accouplement hydrocinétique 10 est analogue à ceux décrits précédemment, notamment pour la figure 1, et comporte respectivement une première phase de fonctionnement, dite phase convertisseur, puis une seconde phase, dite phase de couplage.

Ainsi, lors de la phase convertisseur, le couple de l'arbre menant est transmis par le carter 14 à la roue d'impulseur 22 qui entraîne, par circulation d'huile entre les aubes 22a et 24a, la roue de turbine 24.

Durant cette phase convertisseur, l'amortisseur 20 n'intervient pratiquement pas dans l'amortissement des vibrations ou oscillations de torsion dues principalement aux acyclismes du moteur (non représenté).

Les vibrations ou oscillations de torsion sont filtrées dans l'huile par le convertisseur 18 puisque la transmission du couple moteur est réalisée par l'intermédiaire de l'énergie cinétique de l'huile dans le convertisseur 18, l'amortisseur 20 n'intervenant que pour transmettre le couple de la roue de turbine 24 au moyeu de sortie 90 lié à l'arbre mené A2.

Dans la seconde phase de couplage, on alimente la chambre étanche 40 de manière à provoquer le déplacement du piston 36 axialement de l'avant vers l'arrière, de la position de repos vers la position de fonctionnement.

Le piston 36 exerce alors une pression axiale vers l'arrière qui est propre à serrer axialement les unes contre les autres les surfaces de frottement portées respectivement par les flasques 96 et les disques de friction 46 de l'embrayage 12 afin d'accoupler les arbres menant et mené A2.

L'embrayage 12 est généralement commandé après le démarrage du véhicule et après le couplage hydraulique des arbres menant et mené A2, pour éviter la perte de rendement induite notamment par les phénomènes de glissement se produisant entre les roues d'impulseur 22 et de turbine 24.

Lors de la phase de couplage correspondant à l'état embrayé, c'est-à-dire lorsque le piston 36 vient serrer axialement les disques de friction 46 de l'embrayage 12, le couple de l'arbre menant est transmis d'abord aux rondelles de guidage, en particulier la rondelle de guidage avant 30A qui est liée à la deuxième pièce de liaison 104, puis au voile 32 par l'intermédiaire des organes élastiques 34.

Selon l'invention, l'embrayage de verrouillage 12 de l'appareil 10 comporte des moyens de progressivité qui, déformables élastiquement selon au moins la direction axiale, sont constitués par au moins un premier cordon 58 et un second cordon 60.

Avantageusement, le second cordon 60 est globalement coaxial au premier cordon 58.

Les premier et second cordons 58, 60 sont respectivement interposés axialement entre au moins une face proximale d'appui 48 portée par un premier élément comportant la première surface de frottement S1 et une face distale d'appui 50 portée par un élément adjacent auquel ledit premier élément est lié en rotation par l'intermédiaire de moyens de liaison.

Selon un quatrième mode de réalisation illustré aux figures 21 et 22, ledit premier élément est formé par l'un 96A des flasques 96 dont une face radiale avant forme la première surface de frottement S1 destinée à coopérer avec la deuxième surface de frottement S2 d'une garniture de frottement 44 portée par un des disques de friction 46 adjacent qui forme ledit deuxième élément.

La face radiale arrière du flasque 96A, opposée axialement à la face formant la première surface de frottement S1, constitue la face proximale d'appui 48.

L'élément adjacent comportant la face distale d'appui 50 est constitué par un autre flasque 96B qui, axialement en arrière, est adjacent au flasque 96A comportant la face proximale d'appui 48.

Avantageusement, le flasque 96B est immobilisé axialement par des moyens de butée 118, tels qu'un jonc annulaire.

Les flasques formant le premier élément 96A et l'élément adjacent 96B sont liés en rotation par engrènement de la denture 98 avec des cannelures complémentaires de la première pièce de liaison 100.

L'un des disques de friction 46 de l'embrayage de verrouillage 12 multi-disques forme donc le deuxième élément comportant la deuxième surface de frottement S2, le disque 46 étant lié en rotation par engrènement de la denture 102 avec des cannelures complémentaires de la deuxième pièce de liaison 104.

La deuxième pièce de liaison 104 constitue ladite pièce par l'intermédiaire de laquelle l'embrayage de verrouillage 12 est lié en rotation, directement ou ici par l'intermédiaire de l'amortisseur 20, à la roue de turbine 24.

En effet, la deuxième pièce de liaison 104 est liée en rotation à l'élément d'entrée de l'amortisseur 20 formé par la rondelle de guidage avant 30A, dont le voile 32 formant l'élément de sortie est lié en rotation sans jeu à la roue de turbine 24 de l'appareil 10.

Selon l'invention, l'embrayage de verrouillage 12 comporte des moyens d'ouverture 62 aptes à permettre, lors du pontage par le piston 36, une variation de pression dans un espace annulaire E que délimite axialement les faces proximale et distale d'appui 48, 50 et radialement lesdits au moins premier et second cordons 58, 60.

Par comparaison avec les première et deuxième applications, l'appareil 10 comporte des moyens d'étanchéité aptes à permettre d'établir une pression de commande pour déplacer axialement le piston 36 de l'embrayage de verrouillage 12 vers la position de fonctionnement, dite de pontage, dans laquelle les surfaces de frottement des garnitures de frottement 44 et des flasques 96 coopèrent ensemble pour coupler les arbres menant et mené A2.

Les moyens d'étanchéité de l'appareil 10 sont constitués par le premier moyen d'étanchéité 110 et par le deuxième moyen d'étanchéité 38 qui, respectivement agencés radialement aux extrémités extérieure et intérieure du piston 36 de l'embrayage de verrouillage 12, délimitent axialement avec la deuxième coquille avant 14A du carter la chambre de commande 40 indépendante.

Contrairement aux applications de type monoface ou bifaces décrites précédemment, il n'est donc pas nécessaire que l'un au moins de cordons 58, 60 ou les moyens de liaison assurent une fonction d'étanchéité, les moyens d'étanchéité 38, 110 sont ainsi distincts des moyens de progressivité selon l'invention.

Avantageusement, les moyens d'ouverture 62 destinés à permettre la variation de pression dans l'espace annulaire E associé sont respectivement constitués par un orifice radial de passage 62E réalisé dans le premier cordon externe 58 et par un autre orifice radial de passage 621 réalisé dans le second cordon interne 60.

Les premier et second cordons 58 et 60 présentent globalement une forme circulaire, circonférentiellement continue à l'exception des interruptions formées respectivement par les orifices de passage 62E et 621.

De préférence, les orifices de passage 62E et 621 formant les moyens d'ouverture sont diamétralement opposés de manière que l'huile parcourt dans l'espace annulaire E, entre l'un et l'autre des cordons 58, 60, globalement un demi-cercle, la circulation d'huile permettant d'obtenir un refroidissement, en particulier de la face proximale d'appui 48 du flasque 96A formant le premier élément comportant la première surface de frottement S1.

Avantageusement, les cordons 58 et 60 présentent, en coupe axiale, une section sensiblement constante de manière que les faces proximale et distale d'appui 48, 50 s'étendent radialement globalement parallèlement entre elles avec un écartement axial "e" sensiblement constant.

De préférence, le premier cordon 58 et le second cordon 60 sont identiques, en variante au moins l'un des cordons 58, 60 présente une raideur élastique différente de la raideur élastique de l'autre cordon.

Avantageusement, l'embrayage de verrouillage 12 de l'appareil 10 comporte des moyens de butée axiale aptes à limiter la déformation élastique des cordons 58, 60 formant les moyens de progressivité.

Les figures 23 et 24 représentent en détail un onzième exemple de réalisation décrit ci-après par comparaison avec les figures 21 et 22.

Avantageusement, les moyens de progressivité déformables élastiquement comportent au moins un troisième cordon 59 qui est par exemple agencé entre le premier cordon externe 58 et le second cordon interne 60 auxquels le cordon 59 est globalement coaxial.

Le troisième cordon 59 forme un moyen supplémentaire de progressivité et délimite radialement un premier espace annulaire E1 avec le premier cordon 58 et un deuxième espace annulaire E2 avec le second cordon 60, les espaces annulaires E1 et E2 étant délimités axialement par les faces proximale et distale d'appui 48 et 50.

Les cordons 58, 59 et 60 déformables élastiquement coopèrent, tant en position de fonctionnement que de repos de l'embrayage 12, avec la face proximale d'appui 48 et la face distale d'appui 50, les cordons 58, 59, 60 étant avantageusement solidaires de chacune des deux faces d'appui 48 et 50.

Avantageusement, les trois cordons 58, 59 et 60 sont circonférentiellement continus et présentent une forme globalement circulaire.

Les moyens d'ouverture associés aux cordons 58, 59, 60 de progressivité et destinés à permettre la variation de pression dans chacun des espaces annulaires E1 et E2 sont constitués par une première série de trous 72E et une deuxième série de trous 721 qui traversant axialement le flasque 96B formant l'élément adjacent et débouchant respectivement dans le premier E1 et dans le deuxième E2 espaces annulaires établissent une communication entre chaque espace annulaire E1, E2 et le volume intérieur 16 du carter 14.

Grâce au moyens d'ouverture 72E, 721 associés aux cordons 58, 59 et 60 de progressivité de l'embrayage 12, une circulation d'huile est établie dans le premier espace annulaire E1 compris radialement entre le premier cordon 58 et le troisième cordon 59 et dans le deuxième espace annulaire E2 compris radialement entre le second cordon 60 et le troisième cordon 59.

Avantageusement, ladite circulation d'huile constitue un moyen de refroidissement, en particulier de la face proximale d'appui 48 du premier élément formé par le flasque 96A auquel de la chaleur en provenance de la première surface de frottement S1est transmise par conduction.

Les figures 25 et 26 représentent en détail un douzième exemple de réalisation des moyens de progressivité selon l'invention qui sera décrit ci-après par comparaison, en particulier par comparaison avec le onzième exemple décrit précédemment.

Les moyens de progressivité sont constitués par trois cordons 58, 59 et 60 interposés axialement entre la face proximale d'appui 48 d'un flasque 96A formant le premier élément et la face distale d'appui 50 d'un autre flasque 96B formant l'élément adjacent.

Parmi les quatre flasques 96, les flasques 96A et 96B sont ici les deux flasques situés au centre et non plus les deux flasques les plus proche de l'amortisseur 20 de sorte que les moyens de progressivité sont agencés centralement de l'embrayage de verrouillage 12 multi-disques.

Chacun des cordons 58, 59 et 60 est de forme circulaire et comporte au moins un orifice radial de passage 62E, 62M et 621 lesquels forment respectivement les moyens d'ouverture associés selon l'invention.

Avantageusement, les orifices de passage 62E, 62M et 621 sont décalés angulairement les uns par rapport aux autres de manière que la circulation d'huile dans les espaces annulaires E1 et E2 se fasse suivant un parcours aussi long que possible afin d'obtenir un refroidissement optimal.

La figure 27 représente en détail un treizième exemple de réalisation qui sera décrit ci-après par comparaison, en particulier par comparaison avec le douzième exemple décrit précédemment.

L'embrayage 12 comporte trois cordons concentriques 58, 59 et 60 formant les moyens de progressivité qui présentent, en coupe axiale, une section différente.

De préférence, le premier cordon externe 58 et le second cordon interne 60 sont en position de repos de l'embrayage 12 sensiblement de même section, c'est-à-dire axialement et/ou radialement de même épaisseur, tandis que le troisième cordon 59 présente une section supérieure à celle des cordons 58 et 60.

Le troisième cordon 59 est de préférence solidaire de la face proximale d'appui 48 du flasque 96A comme de la face distale d'appui 50 du flasque 96B et cela que l'embrayage 12 soit en position de fonctionnement ou de repos comme illustré à la figure 27.

Les autres cordons 58 et 60 déformables élastiquement sont solidaires de l'une des faces, ici de la face distale d'appui 50 du flasque 96B, et sont susceptibles en position de fonctionnement de l'embrayage 12, de coopérer ou non, avec l'autre face proximale d'appui 48 du flasque 96A.

Avantageusement, les moyens d'ouverture 62 destinés à permettre la variation de pression dans les espaces annulaires E1 et E2 sont constitués par le jeu axial entre les cordons 58 et 60 déformables élastiquement et la face proximale d'appui 48.

Les figures 28 et 29 représentent un quatorzième exemple de réalisation dans lequel les moyens de progressivité sont constitués par trois cordons 158, 159 et 160 concentriques qui sont interposés axialement entre le piston 36 et un flasque 96.

L'élément adjacent comportant la face distale d'appui 150 est constitué par le piston 36, ledit piston 36 étant interposé axialement entre la deuxième coquille avant 14A du carter et un des flasques 96 qui, comportant la face proximale d'appui 148, constitue le premier élément comportant au moins une des surfaces de frottement de l'embrayage 12.

La face radiale arrière du piston 36 constitue donc la face distale d'appui 150 tandis que la face radiale avant du flasque 96, situé le plus en avant, constitue la face proximale d'appui 148.

La surface de frottement du premier élément est formée par la face radiale arrière du flasque 96, axialement opposée à la face proximale d'appui 148 et l'élément adjacent formé par le piston 36 est lié en rotation au flasque 96 par l'intermédiaire de moyens de liaison qui sont ici constitués par la denture 98 du flasque et la première pièce de liaison 100.

Avantageusement, l'embrayage 12 comporte des moyens d'ouverture aptes à permettre, lors du pontage par le piston 36 et l'augmentation de la pression dans la chambre de commande 40, une variation de pression dans chaque espace annulaire E1, E2 que délimite axialement les faces proximale et distale d'appui 148, 150 et radialement les cordons 158, 159 et 160.

De préférence, les moyens d'ouverture 62 sont formés par des orifices de passage réalisés au moins dans les cordons 158 et 160, le cordon 159 étant circonférentiellement continu et de forme circulaire.

En variante, les moyens d'ouverture 62 sont formés par des trous axiaux réalisés exclusivement dans le flasque 96.

Avantageusement, le troisième cordon 159 présente une raideur élastique différente de la raideur élastique des autres cordons 158 et 160, de préférence une raideur élastique supérieure de manière que le troisième cordon 159 soit le premier moyen de progressivité à intervenir lors du pontage, suivi ensuite par les premier et second cordons 158 et 160.

Avantageusement, le troisième cordon 159 est susceptible de former un moyen de butée axiale apte à limiter, notamment en raison de la raideur élastique supérieure, la déformation élastique des autres cordons 158 et 160.

De préférence, les cordons 158, 159 et 160 ont tous une section sensiblement égale. En variante, le troisième cordon 159 présente une section supérieure, comme par exemple illustré à la figure 27.

La figure 30 représente un quinzième mode de réalisation dans lequel l'embrayage de verrouillage 12 comporte au moins deux ensembles de moyens de progressivité, respectivement primaire et secondaire.

Les moyens primaires de progressivité sont constitués par un premier cordon 158 et un second cordon 160 qui sont interposés axialement entre le piston 36 et le flasque 96 adjacent comme dans le quatorzième exemple de réalisation décrit précédemment.

Les moyens secondaires de progressivité sont analogues à ceux décrits pour le onzième exemple de réalisation illustré aux figures 23 et 24 et sont constitués par trois cordons 58, 59 et 60 interposés axialement entre deux flasques 96A et 96B.

Dans le quatrième mode de réalisation et les exemples de réalisation non limitatifs successivement représentés sur les figures 21 à 30, les moyens de progressivité sont avantageusement réalisés en un matériau élastomère, telle qu'une silicone thixotrope, présentant des caractéristiques stables lorsqu'il est immergé dans l'huile contenue dans le carter 14 de l'appareil 10.

Avantageusement, le matériau élastomère est apte à être adhérisé directement par polymérisation avec l'une et/ou l'autre des faces proximale d'appui 48, 148 du premier élément 96, 96A et distale d'appui 50, 150 de l'élément adjacent 36, 96B.

De préférence, la polymérisation du matériau élastomère est obtenue par chauffage, pendant une durée déterminée, à une température supérieure ou égale à une température donnée dite de polymérisation.

Avantageusement, le matériau élastomère est adhérisé aux faces proximale d'appui 48, 148 du premier élément et/ou distale d'appui 50, 150 de l'élément adjacent par collage par l'intermédiaire d'une colle apte à lier solidairement le matériau élastomère aux matériaux respectifs du premier élément et de l'élément adjacent.

De préférence, au moins les moyens de progressivité 58, 60 sont réalisés en un matériau avantageusement choisi parmi les silicones thixotropes, les fluoro-silicones étant particulièrement adaptées pour de telles applications dans l'huile.

Avantageusement, le chauffage permet généralement de réduire le temps de polymérisation du matériau élastomère.

En variante, la polymérisation du matériau élastomère est réalisée à froid, c'est-à-dire à température ambiante.

Bien entendu, l'invention n'est nullement limitée aux modes et exemples de réalisation décrits et représentés.

## Revendications

1. Appareil d'accouplement hydrocinétique (10), notamment pour un véhicule automobile, comportant autour d'un axe principal (X-X) au moins :
- un carter (14) comportant une première coquille (14B), dite arrière, qui lie en rotation un arbre menant et une roue d'impulseur (22) ;
- une roue de turbine (24) qui est solidaire en rotation, par une liaison sans jeu, d'une pièce (28) apte à être liée en rotation à un arbre mené (A2) ;
- un embrayage de verrouillage (12) du couplage des arbres menant et mené (A2) comportant un piston (36) mobile axialement pour lier, de manière débrayable, une deuxième coquille (14A), dite avant, du carter (14) à l'arbre mené (A2), le piston (36) étant apte à être commandé sélectivement pour serrer axialement au moins une première surface de frottement (S1) que comporte un premier élément (44, 46) contre une deuxième surface de frottement (S2) associée que comporte un deuxième élément (36, 56),
**caractérisé en ce que** l'embrayage de verrouillage (12) de l'appareil (10) comporte des moyens de progressivité (58, 59, 60) qui, déformables élastiquement selon au moins la direction axiale, sont constitués par au moins un premier cordon (58) et un second cordon (60), globalement coaxial au premier cordon (58), lesdits premier et second cordons (58, 60) étant respectivement interposés axialement entre au moins une face proximale d'appui (48) portée par le premier élément (44, 46) comportant la première surface de frottement (S1) et une face distale d'appui (50) portée par un élément adjacent (36) auquel ledit premier élément (44, 46) est lié en rotation par l'intermédiaire de moyens de liaison (54, 68, 70, 69, 71, 76, 98, 100), et **en ce qu'**il comporte des moyens d'ouverture (62, 72) aptes à permettre, lors du pontage par le piston (36), une variation de pression dans un espace (E, E1, E2) que délimitent axialement les faces proximale et distale d'appui (48, 50) et radialement lesdits au moins premier et second cordons (58, 60).

2. Appareil selon la revendication 1, **caractérisé en ce qu'**il comporte des moyens d'étanchéité (64) aptes à permettre d'établir une pression de commande pour déplacer axialement le piston (36) de l'embrayage de verrouillage (12) vers une position de fonctionnement, dite de pontage, dans laquelle les surfaces de frottement (S1, S2) coopèrent pour coupler les arbres menant et mené (A2).

3. Appareil selon la revendication 2, **caractérisé en ce que** les moyens d'étanchéité (64) sont constitués au moins par l'un (59,60) des cordons (58, 59, 60) qui est interposé axialement entre la face proximale d'appui (48) portée par le premier élément (44, 46) comportant la première surface de frottement (S1) et la face distale d'appui (50) portée par l'élément (36) adjacent au premier élément (44, 46).

4. Appareil selon l'une quelconque des revendications 1 à 3, **caractérisé en ce que** les moyens de progressivité (58, 59, 60) comportent au moins un troisième cordon (59) formant un moyen supplémentaire de progressivité, globalement coaxial aux premier et second cordons (58, 60).

5. Appareil selon la revendication 4, **caractérisé en ce que** le troisième cordon (59) délimite radialement un premier espace (E1) avec le premier cordon (58) et un deuxième espace (E2) avec le second cordon (60), lesdits espaces (E1, E2) étant délimités axialement par les faces proximale (48) et distale (50) d'appui.

6. Appareil selon l'une quelconque des revendications précédentes, **caractérisé en ce que** au moins les moyens de progressivité (58, 59, 60) sont réalisés en un matériau élastomère présentant des caractéristiques stables lorsqu'il est immergé dans l'huile contenue dans le carter (14) de l'appareil (10).

7. Appareil selon l'une quelconque des revendications précédentes, **caractérisé en ce que** les moyens d'ouverture (62, 72) sont constitués par au moins un trou (72) traversant axialement l'élément adjacent (36) et/ou par au moins un trou traversant axialement le premier élément (44, 46) de manière à établir une communication entre au moins un espace associé (E, E1, E2) dans lequel ledit au moins un trou (72) débouche et le volume intérieur (16) du carter (14) rempli d'huile.

8. Appareil selon l'une quelconque des revendications précédentes, **caractérisé en ce que** les moyens d'ouverture (62, 72) sont constitués par au moins un orifice radial de passage (62, 62E, 621) réalisé sélectivement dans tout ou partie des cordons (58, 59, 60) formant les moyens de progressivité.

9. Appareil selon l'une quelconque des revendications précédentes, **caractérisé en ce que** les moyens d'ouverture (62, 72) sont aptes à établir, dans au moins un espace associé (E, E1, E2), une circulation d'huile propre à permettre un refroidissement, en particulier de la face proximale d'appui (48) du premier élément (44, 46) comportant la première surface de frottement (S1).

10. Appareil selon l'une quelconque des revendications précédentes, **caractérisé en ce que** les cordons (58, 59, 60) présentent, en coupe axiale, selon la direction radiale et suivant une orientation allant de l'intérieur vers l'extérieur, une section croissante de manière que l'écartement axial "e", compris entre le premier élément (44, 46) comportant la face proximale d'appui (48) et l'élément adjacent (36) comportant la face distale d'appui (50), augmente suivant la direction radiale afin que la première surface de frottement (S1) du premier élément (44, 46) soit inclinée.

11. Appareil selon l'une quelconque des revendications précédentes, **caractérisé en ce que** au moins un des cordons (58, 59, 60) présente une raideur élastique différente de la raideur élastique de l'un au moins des autres cordons (58, 59, 60).

12. Appareil selon l'une quelconque des revendications précédentes, **caractérisé en ce que** l'embrayage de verrouillage (12) de l'appareil comporte des moyens de butée axiale (74) aptes à limiter la déformation élastique des moyens de progressivité (58, 59, 60).

## Claims

1. Hydrokinetic coupling device (10), in particular for a motor vehicle, comprising around a main axis (X-X) at least:
- a housing (14) comprising a first shell (14B) known as the rear shell, which connects in rotation a drive shaft and an impeller wheel (22);
- a turbine wheel (24) which is integral in rotation, by means of connection without play, with a part (28) which can be connected in rotation to a driven shaft (A2);
- a lock-up clutch (12) for the coupling of the drive and driven shafts (A2), comprising a piston (36) which is mobile axially, in order to connect in a releasable manner a second shell (14A), known as the front shell, of the housing (14), to the driven shaft (A2), the piston (36) being able to be controlled selectively in order to clamp axially at least a first friction surface (S1) which a first element (44, 46) comprises, against a second associated friction surface (S2) which a second element (36, 56) comprises,
**characterised in that** the lock-up clutch (12) of the device (10) comprises progressivity means (58, 59, 60), which are deformable resiliently according to at least the axial direction, and are constituted by at least a first bead (58) and a second bead (60) which is globally coaxial to the first bead (58), the said first and second beads (58, 60) being interposed respectively axially between at least a proximal support surface (48) which is supported by the first element (44, 46) comprising the first friction surface (S1), and a distal support surface (50) which is supported by an adjacent element (36), to which the said first element (44, 46) is connected in rotation by means of connection means (54, 68, 70, 69, 71, 76, 98, 100), and **in that** it comprises opening means (62, 72) which, during the bridging by the piston (36), can permit a variation of pressure in a space (E, E1, E2) delimited axially by the proximal and distal support surfaces (48, 50), and radially by the said at least first and second beads (58, 60).

2. Device according to claim 1, **characterised in that** it comprises sealing means (64) which can make it possible to establish a control pressure, in order to displace axially the piston (36) of the lock-up clutch (12) to a functioning position known as the bridging position, in which the friction surfaces (S1, S2) co-operate in order to couple the drive and driven shafts (A2).

3. Device according to claim 2, **characterised in that** the sealing means (64) are constituted at least by one (59, 60) of the beads (58, 59, 60) which is interposed axially between the proximal support surface (48) which is supported by the first element (44, 46) comprising the first friction surface (S1), and the distal support surface (50) which is supported by the element (36) adjacent to the first element (44, 46).

4. Device according to any one of claims 1 to 3, **characterised in that** the progressivity means (58, 59, 60) comprise at least a third bead (59) which forms an additional progressivity means, which is globally coaxial to the first and second beads (58, 60).

5. Device according to claim 4, **characterised in that** the third bead (59) delimits radially a first space (E1) together with the first bead (58), and a second space (E2) together with the second bead (60), the said spaces (E1, E2) being delimited axially by the proximal (48) and distal (50) support surfaces.

6. Device according to any one of the preceding claims, **characterised in that** at least the progressivity means (58, 59, 60) are made of an elastomer material which has stable characteristics when it is immersed in the oil contained in the housing (14) of the device (10).

7. Device according to any one of the preceding claims, **characterised in that** the opening means (62, 72) are constituted by at least one hole (72) which passes axially through the adjacent element (36), and/or by at least one hole which passes axially through the first element (44, 46) so as to establish communication between at least one associated space (E, E1, E2), and wherein the said at least one hole (72) opens into the inner volume (16) of the housing (14) which is filled with oil.

8. Device according to any one of the preceding claims, **characterised in that** the opening means (62, 72) are constituted by at least one radial passage aperture (62, 62E, 621) which is provided selectively in all or part of the beads (58, 59, 60) which form the progressivity means.

9. Device according to any one of the preceding claims, **characterised in that** the opening means (62, 72) can establish in at least one associated space (E, E1, E2) circulation of oil which can permit cooling, in particular of the proximal support surface (48) of the first element (44, 46) comprising the first friction surface (S1).

10. Device according to any one of the preceding claims, **characterised in that** the beads (58, 59, 60) have, in axial cross-section, according to the radial direction and in an orientation which goes from the interior towards the exterior, a cross-section which increases such that the axial spacing "e" contained between the first element (44, 46) comprising the proximal support surface (48) and the adjacent element (36) comprising the distal support surface (50), increases in the radial direction, such that the first friction surface (S1) of the first element (44, 46) is inclined.

11. Device according to any one of the preceding claims, **characterised in that** at least one of the beads (58, 59, 60) has a resilient rigidity which is different from the resilient rigidity of at least one of the other beads (58, 59, 60).

12. Device according to any one of the preceding claims, **characterised in that** the lock-up clutch (12) of the device comprises axial stop means (74) which can limit the resilient deformation of the progressivity means (58, 59, 60).

## Patentansprüche

1. Hydrodynamische Kupplungsvorrichtung (10), insbesondere für ein Kraftfahrzeug, umfassend um eine Hauptachse (X-X) zumindest
e in Gehäuse (14) mit einer als hintere Schale bezeichneten ersten Schale (14B), die eine Antriebswelle und ein Pumpenrad (22) drehfest miteinander verbindet;
e in Turbinenrad (24), das über eine spielfreie Verbindung drehfest mit einem Teil (28) verbunden ist, welches geeignet ist, drehfest mit einer Abtriebswelle (A2) verbunden zu werden;
e ine Überbrückungskupplung (12) zum Koppeln der Antriebs- und Abtriebswelle (A2), umfassend einen axial beweglichen Kolben (36), um in entkuppelbarer Weise eine als vordere Schale bezeichnete zweite Schale (14A) des Gehäuses (14) mit der Abtriebswelle (A2) zu verbinden, wobei der Kolben (36) geeignet ist, selektiv gesteuert zu werden, um zumindest eine von einem ersten Element (44, 46) getragene erste Reibungsfläche (S1) axial gegen eine zugehörige zweite Reibungsfläche (S2) zu spannen, die von einem zweiten Element (36, 56) getragen wird,
**dadurch gekennzeichnet,**
**dass** die Oberbrückungskupplung (12) der Vorrichtung (10) zumindest in der axialen Richtung elastisch verformbare Progressivitätsmittel (58, 59, 60) umfasst, die durch mindestens einen ersten Strang (58) und einen zweiten Strang (60), der im wesentlichen koaxial zum ersten Strang (58) ist, gebildet sind, wobei der erste und zweite Strang (58, 60) jeweils axial zwischengefügt sind zwischen zumindest eine proximale Auflagefläche (48), die von dem die erste Reibungsfläche (S1) aufweisenden ersten Element (44, 46) getragen wird, und eine distale Auflagefläche (50), die von einem benachbarten Element (36) getragen wird, mit weichem das erste Element (44, 46) unter Vermittlung von Verbindungsmittein (54, 68, 70, 69, 71, 76, 98, 100) rotatorisch verbunden ist,
und **dadurch**, dass sie Öffnungsmittel (62, 72) umfasst, die dazu geeignet sind, bei der Überbrückung durch den Kolben (36) eine Druckveränderung in einem Raum (E, E1, E2) zu erlauben, weichen axial die proximale und distale Auflagefläche (48, 50) und radial der erste und zweite Strang (58, 60) begrenzen.

2. Vorrichtung nach Anspruch 1, **dadurch gekennzeichnet, dass** sie Dichtungsmittel (64) umfasst, die dazu geeignet sind, die Schaffung eines Steuerdrucks zu erlauben, um den Kolben (36) der Oberbrückungskupplung (12) axial in eine als Überbrückungsposition bezeichnete Funktionsposition zu verlagern, in weicher die Reibungsflächen (S1, S2) zusammenwirken, um die Antriebs- und Abtriebswelle (A2) zu koppeln.

3. Vorrichtung nach Anspruch 2, **dadurch gekennzeichnet, dass** die Dichtungsmittel (64) zumindest durch einen (59, 60) der Stränge (58, 59, 60) gebildet sind, der axial eingesetzt ist zwischen die proximale Auflagefläche (48), die von dem die erste Reibungsfläche (S1) aufweisenden ersten Element (44, 46) getragen wird, und die distale Auflagefläche (50), die von dem zum ersten Element (44, 46) benachbarten Element (36) getragen wird,

4. Vorrichtung nach einem der Ansprüche 1 bis 3, **dadurch gekennzeichnet, dass** die Progressivitätsmittel (58, 59, 60) zumindest einen dritten Strang (59) umfassen, der ein zusätzliches Progressivitätsmittel bildet und im wesentlichen koaxial zum ersten und zweiten Strang (58, 60) ist.

5. Vorrichtung nach Anspruch 4, **dadurch gekennzeichnet, dass** der dritte Strang (59) mit dem ersten Strang (58) einen ersten Raum (E1) und mit dem zweiten Strang (60) einen zweiten Raum (E2) radial begrenzt, wobei die beiden Räume (E1, E2) axial durch die die proximale (48) und distale (50) Auflagefläche begrenzt werden,

6. Vorrichtung nach einem der vorherigen Ansprüche, **dadurch gekennzeichnet, dass** zumindest die Progressivitätsmittel (58, 59, 60) aus einem elastischen Material ausgeführt sind, weiches stabile Eigenschaften aufweist, wenn es in das im Gehäuse (14) der Vorrichtung (10) enthaltene Öl eingetaucht ist.

7. Vorrichtung nach einem der vorherigen Ansprüche, **dadurch gekennzeichnet, dass** die Öffnungsmittel (62, 72) gebildet sind durch mindestens ein Loch (72), welches axial das benachbarte Element (36) durchquert und/oder durch mindestens ein Loch, welches axial das erste Element (44, 46) durchquert, um eine Kommunikation zwischen zumindest einem zugeordneten Raum (E, E1, E2), in welchem das besagte mindestens eine Loch (72) mündet, und dem mit Öl gefüllten inneren Volumen (16) des Gehäuses (14) zu schaffen.

8. Vorrichtung nach einem der vorherigen Anspruche, **dadurch gekennzeichnet, dass** die Öffnungsmittel (62, 72) durch mindestens eine radiale Durchgangsöffnung (62. 62E, 62l) gebildet sind, weiche selektiv in allen oder einem Teil der die Progressivitätsmittel bildenden Stränge (58, 59, 60) ausgeführt ist.

9. Vorrichtung nach einem der vorherigen Ansprüche, **dadurch gekennzeichnet, dass** die Öffnungsmittel (62, 72) geeignet sind, in zumindest einem zugeordneten Raum (E, E1, E2) eine Zirkulation des Öls herbeizuführen, welche eine Kühlung ermöglichen kann, insbesondere eine Kühlung der proximalen Auflagefläche (48) des die erste Reibungsfläche (S1) aufweisenden ersten Elements (44, 46).

10. Vorrichtung nach einem der vorherigen Ansprüche, **dadurch gekennzeichnet, dass** die Stränge (58, 59, 60) im axialen Schnitt entlang einer radialen Richtung von innen nach außen einen derart zunehmenden Querschnitt haben, dass die zwischen dem die proximale Auflagefläche (48) aufweisenden ersten Element (44, 46) und dem die distale (50) Auflagefläche aufweisenden benachbarten Element (36) vorhandene axiale Entfernung "e" entlang der radialen Richtung ansteigt, damit die erste Reibungsfläche (S1) des ersten Elements (44, 46) geneigt ist.

11. Vorrichtung nach einem der vorherigen Ansprüche, **dadurch gekennzeichnet, dass** zumindest einer der Stränge (58, 59, 60) eine elastische Steifheit aufweist, die verschieden ist von der elastischen Steifheit von zumindest einem der anderen Stränge (58, 59, 60).

12. Vorrichtung nach einem der vorherigen Ansprüche, **dadurch gekennzeichnet, dass** die Überbrückungskuppiung (12) der Vorrichtung axiale Anschlagmittel (74) umfasst, die geeignet sind die elastische Verformung der Progressivitätsmittel (58, 59, 60) zu begrenzen.
